# EUROPEAN PATENT APPLICATION

(11) **EP 4 730 666 A1**
(43) Date of publication of application: **22.04.2026**
(21) Application number: 24822776.1
(22) Date of filing: 14.06.2024
(51) Int. Cl.: H04B 7/06

(54) **METHOD AND APPARATUS IN NODE USED FOR WIRELESS COMMUNICATION**

(30) Priority: 15.06.2023 CN 202310715283
(71) Applicant: Apogee Networks, LLC, Plano, TX 75024 (US)
(72) Inventor: WU, Keying, Shanghai 201206 (CN); ZHANG, Xiaobo, Shanghai 201206 (CN)
(74) Representative: Gunzelmann, Rainer
(86) International application number: PCT/CN2024/099148
(87) International publication number: WO 2024/255828

(57) **Abstract**

Disclosed in the present application are a method and apparatus in a node used for wireless communication. A first receiver receives a first information block, wherein the first information block is used for determining a first time domain resource, and the first time domain resource comprises at least one symbol; a first configuration information block is received, wherein the first configuration information block is used for determining a first resource set and a second resource set; and a first transmitter sends first CSI, wherein the first resource set is used to obtain a channel measurement for calculating the first CSI, at least one of the second resource set or a third resource set is used to obtain an interference measurement for calculating the first CSI, and whether the third resource set is used to obtain the interference measurement for calculating the first CSI depends on the first time domain resource. By means of the present application, the signaling overheads are saved, and the system performance is improved.

## Description

### Technical Field

The present application relates to a transmission method and apparatus in a wireless communication system, in particular, to a transmission method and apparatus for a wireless signal in a wireless communication system supporting a cellular network.

### Background Art

In an existing New Radio (NR) system, spectrum resources are divided into a Frequency Division Duplexing (FDD) spectrum and a Time Division Duplexing (TDD) spectrum. For the TDD spectrum, both a base station and User Equipment (UE) operate in a half-duplex mode. Such half-duplex mode avoids self-interference and can alleviate the impact of cross link interference, but it brings about a decrease in resource utilization rate and an increase in latency. In response to these problems, supporting a flexible duplex mode or a variable link direction (uplink or downlink or flexible) on the TDD spectrum or the FDD spectrum becomes a possible solution. In the 3rd Generation Partner Project (3GPP) Radio Access Network (RAN) #88e^{th} meeting and the 3GPP Release(R)-18 workshop, supporting the more flexible duplex mode or a full-duplex mode in NR R-18 has received extensive attention and discussion, especially a Subband non-overlapping Full Duplex (SBFD) mode at a gNB (NR node B) side. In this mode, a same symbol is used for uplink in part of frequency resources and for downlink in another part of frequency resources, thereby improving resource utilization and reducing a delay.

In conventional wireless communication, a User Equipment (UE) report may include at least one of various types of auxiliary information, for example, Channel State Information (CSI), auxiliary information related to beam management, auxiliary information related to positioning, and the like. Herein, the CSI includes at least one of a CSI-RS Resource Indicator (CRI), a Rank indicator (RI), a Precoding Matrix Indicator (PMI), or a Channel Quality Indicator (CQI). In the NR system, the UE is configured with resources for a channel measurement and resources for an interference measurement for obtaining a channel measurement and an interference measurement for calculating CSI.

### Summary of the Invention

The inventor found through research that how to allocate resources for obtaining an interference measurement required for calculating CSI is a problem that needs to be solved.

In view of the above-mentioned problem, the present application discloses a solution. It should be noted that although scenarios of a more flexible duplex mode, a full-duplex mode, and an SBFD are used as an example in the above descriptions, the present application can further be applied to another duplex mode scenario. Further, the use of a unified design solution for different scenarios (including but not limited to a more flexible duplex mode, a full-duplex mode, an SBFD mode, a half-duplex mode, and a conventional duplex mode) can facilitate reduction of hardware complexity and costs.In the absence of conflicts, embodiments and features in the embodiments in any node of the present application can be applied to any other nodes. In the absence of conflicts, embodiments and features in the embodiments of the present application may be arbitrarily combined with each other.

As an embodiment, the interpretation of the terminology in the present application is based on the definition provided in the TS38 series of the 3GPP specifications.

As an embodiment, the interpretation of the terminology in the present application is based on the definition provided in the TS37 series of the 3GPP specifications.

The present application discloses a method used in a first node for wireless communication, comprising:
receiving a first information block, wherein the first information block is used for determining a first time domain resource, and the first time domain resource comprises at least one symbol;
receiving a first configuration information block, wherein the first configuration information block is used for determining a first resource set and a second resource set; and
sending first CSI,
wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

As an embodiment, the problem to be solved by the present application includes: in a system configured with a first time domain resource, how to determine a resource used for an interference measurement that is associated with the first CSI. In the above-mentioned method, the resource used for the interference measurement that is associated with the first CSI depends on the first time domain resource, which solves the problem.

As an embodiment, the benefits of the above-mentioned method include: providing a mechanism to configure different resources for interference measurements for different symbols, better matching interference environments on different symbols.

As an embodiment, the benefits of the above-mentioned method include a more accurate interference measurement, thereby improving precision of a CSI report, and enhancing system performance.

As an embodiment, the benefits of the above-mentioned method include: simplifying a change to a configuration of an interference resource in a standard.

As an embodiment, the benefits of the above-mentioned method include: saving signaling overhead.

According to an aspect of the present application, only one of the second resource set or the third resource set is used for obtaining the interference measurement for calculating the first CSI, and which one of the second resource set and the third resource set is used for obtaining the interference measurement for calculating the first CSI depends on the first time domain resource.

As an embodiment, the benefits of the above-mentioned method include: The method makes little change to an existing CSI report architecture in a standard, and is easy to implement.

As an embodiment, the benefits of the above-mentioned method include: There are different resource configurations to meet requirements of symbols within and outside the first time domain resource, thereby improving accuracy of the interference measurement, accuracy of a CSI report, and system performance.

As an embodiment, the benefits of the above-mentioned method include: simplifying a signaling design when symbols within and outside the first time domain resource have different interference measurement requirements.

According to an aspect of the present application, only the second resource set among the second resource set and the third resource set is used for obtaining the interference measurement for calculating the first CSI, or both the second resource set and the third resource set are used for obtaining the interference measurement for calculating the first CSI; and whether one or both of the second resource set and the third resource set are used for obtaining the interference measurement for calculating the first CSI depends on the first time domain resource.

As an embodiment, the benefits of the above-mentioned method include: symbols within and outside the first time domain resource share a configuration of the second resource set, thereby improving a utilization rate of the second resource set; and when the symbols within and outside the first time domain resource have partially identical interference measurement requirements, signaling overhead is reduced.

As an embodiment, the benefits of the above-mentioned method include: using the third resource set to separately meet interference measurement requirements of symbols in the first time domain resource, thereby improving accuracy of a CSI report and system performance.

According to an aspect of the present application, including:
receiving a second information block,
wherein the first configuration information block indicates K1 resource sets, and the K1 is a positive integer greater than 1; and the second resource set and the third resource set are each one of the K1 resource sets, and the second information block is used for determining the second resource set and the third resource set.

As an embodiment, the benefits of the above-mentioned method include: saving signaling overhead.

As an embodiment, the benefits of the above-mentioned method include: better backward compatibility.

According to an aspect of the present application, including:
receiving a third information block,
wherein the first configuration information block indicates K2 resource sets and K3 resource sets, the K2 and the K3 are each a positive integer, and at least one of the K2 or the K3 is greater than 1; the second resource set is one of the K2 resource sets, and the third resource set is one of the K3 resource sets; and the third information block is used for determining at least one of the second resource set or the third resource set.

As an embodiment, the benefits of the above-mentioned method include: supporting separately configuration of candidate resource sets for an interference measurement for symbols within and outside the first time domain resource, thereby improving signaling flexibility and having better forward compatibility.

According to an aspect of the present application, including:
receiving a fourth information block and a fifth information block,
wherein the fourth information block is used for configuring the second resource set, and the fifth information block is used for configuring the third resource set.

According to an aspect of the present application, a first transmission occasion set is used for obtaining the channel measurement for calculating the first CSI, and any transmission occasion in the first transmission occasion set is a transmission occasion of one resource in the first resource set; and the first transmission occasion set depends on the first time domain resource.

As an embodiment, the benefits of the above-mentioned method include: a channel measurement for calculating the first CSI is restricted within the first time domain resource or restricted outside the first time domain resource, thereby ensuring the accuracy of the channel measurement and further improving system performance.

According to an aspect of the present application, wherein the first node is a user equipment.

According to an aspect of the present application, wherein the first node is a relay node.

The present application discloses a method used in a second node for wireless communication, comprising:
sending a first information block, wherein the first information block is used for determining a first time domain resource, and the first time domain resource comprises at least one symbol;
sending a first configuration information block, wherein the first configuration information block is used for determining a first resource set and a second resource set; and
receiving first CSI,
wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

According to an aspect of the present application, only one of the second resource set or the third resource set is used for obtaining the interference measurement for calculating the first CSI, and which one of the second resource set and the third resource set is used for obtaining the interference measurement for calculating the first CSI depends on the first time domain resource.

According to an aspect of the present application, only the second resource set among the second resource set and the third resource set is used for obtaining the interference measurement for calculating the first CSI, or both the second resource set and the third resource set are used for obtaining the interference measurement for calculating the first CSI; and whether one or both of the second resource set and the third resource set are used for obtaining the interference measurement for calculating the first CSI depends on the first time domain resource.

According to an aspect of the present application, including:
sending a second information block,
wherein the first configuration information block indicates K1 resource sets, and the K1 is a positive integer greater than 1; and the second resource set and the third resource set are each one of the K1 resource sets, and the second information block is used for determining the second resource set and the third resource set.

According to an aspect of the present application, including:
sending a third information block,
wherein the first configuration information block indicates K2 resource sets and K3 resource sets, the K2 and the K3 are each a positive integer, and at least one of the K2 or the K3 is greater than 1; the second resource set is one of the K2 resource sets, and the third resource set is one of the K3 resource sets; and the third information block is used for determining at least one of the second resource set or the third resource set.

According to an aspect of the present application, including:
sending a fourth information block and a fifth information block,
wherein the fourth information block is used for configuring the second resource set, and the fifth information block is used for configuring the third resource set.

According to an aspect of the present application, a first transmission occasion set is used for obtaining the channel measurement for calculating the first CSI, and any transmission occasion in the first transmission occasion set is a transmission occasion of one resource in the first resource set; and the first transmission occasion set depends on the first time domain resource.

According to an aspect of the present application, wherein the second node is a base station.

According to an aspect of the present application, wherein the second node is a user equipment.

According to an aspect of the present application, wherein the second node is a relay node.

The present application discloses a first node device for wireless communication, comprising:
a first receiver receiving a first information block, wherein the first information block is used for determining a first time domain resource, and the first time domain resource comprises at least one symbol;
receiving a first configuration information block, wherein the first configuration information block is used for determining a first resource set and a second resource set; and
a first transmitter sending first CSI,
wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

The present application discloses a second node device for wireless communication, comprising:
a second transmitter sending a first information block, wherein the first information block is used for determining a first time domain resource, and the first time domain resource comprises at least one symbol;
sending a first configuration information block, wherein the first configuration information block is used for determining a first resource set and a second resource set; and
a second receiver receiving first CSI,
wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

As an embodiment, compared with a traditional solution, the present application has the following advantages:
increasing accuracy of an interference measurement and improving precision of a CSI report;
saving signaling overhead;
simplifying a design and reducing complexity of system implementation; and
having good forward and backward compatibility.

### Brief Description of the Drawings

Other features, purposes and advantages of the present application will become more apparent by reading the detailed description of non-limiting embodiments with reference to the following drawings:
FIG. 1 shows a flowchart of a first information block, a first configuration information block, and a first CSI according to an embodiment of the present application;
FIG. 2 shows a schematic diagram of a network architecture according to an embodiment of the present application;
FIG. 3 shows a schematic diagram of an embodiment of a radio protocol architecture for a user plane and a control plane according to an embodiment of the present application;
FIG. 4 shows a schematic diagram of a first communication device and a second communication device according to an embodiment of the present application;
FIG. 5 shows a flowchart of transmission according to an embodiment of the present application;
FIG. 6 shows a schematic diagram of a first frequency domain resource according to an embodiment of the present application;
FIG. 7 shows a schematic diagram of only one of a second resource set or a third resource set being used for an interference measurement according to an embodiment of the present application;
FIG. 8 shows a schematic diagram of a resource set being used for an interference measurement according to an embodiment of the present application;
FIG. 9 shows a schematic diagram of a second information block according to an embodiment of the present application;
FIG. 10 shows a schematic diagram of a third information block according to an embodiment of the present application;
FIG. 11 shows a schematic diagram of a fourth information block and a fifth information block according to an embodiment of the present application;
FIG. 12 shows a schematic diagram of a first transmission occasion set according to an embodiment of the present application;
FIG. 13 shows a structural block diagram of a processing apparatus used in a first node device according to an embodiment of the present application; and
FIG. 14 shows a structural block diagram of a processing apparatus used in a second node device according to an embodiment of the present application.

### Detailed Description of Embodiments

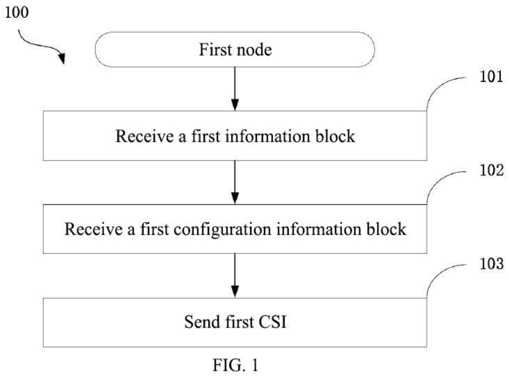

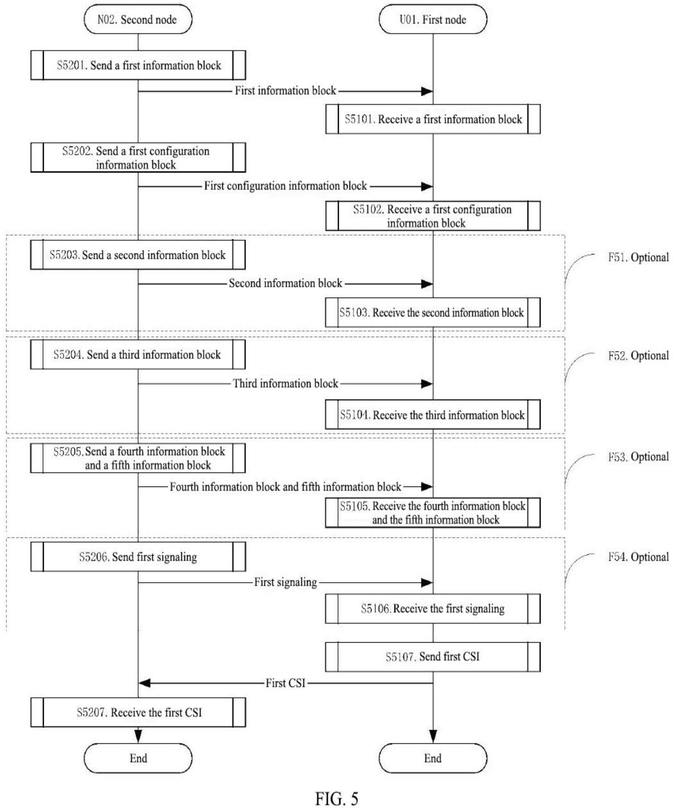

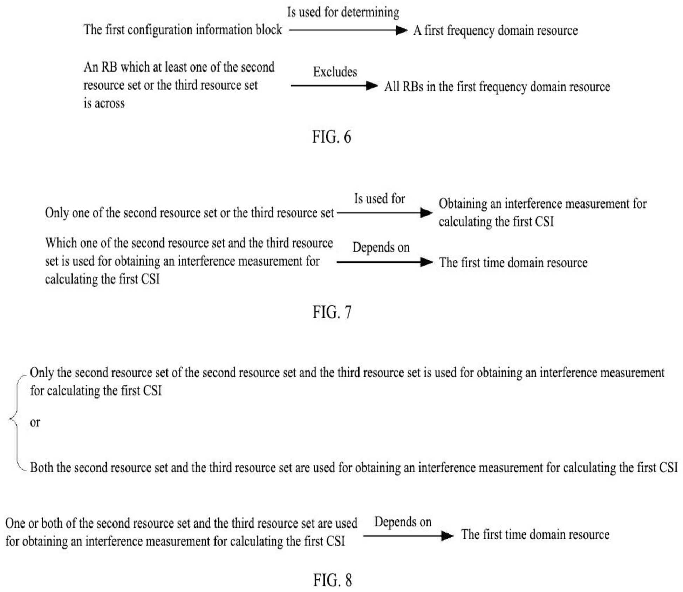

The technical solutions of the present application will be further described in detail below in conjunction with the drawings. It should be noted that, in the absence of conflict, embodiments and the features in the embodiments in the present application can be arbitrarily combined with each other. Based on considerations of flexibility, complexity, overhead, and compatibility, those skilled in the art are motivated to flexibly combine embodiments in different drawings without contradiction, for example (but not limited to) the embodiments in FIG. 1 and the embodiments in FIG. 5 to FIG. 12, the embodiments in FIG. 5 and the embodiments in FIG. 6 to FIG. 12, and the like.

### Embodiment 1

Embodiment 1 illustrates a flowchart of a first information block, a first configuration information block, and first CSI according to an embodiment of the present application, as shown in FIG. 1. In 100 shown in FIG. 1, each block represents one step. In particular, the order of steps in the boxes does not represent a specific chronological order among those steps.

In Embodiment 1, the first node in the present application receives a first information block in step 101, the first information block is used for determining a first time domain resource, and the first time domain resource includes at least one symbol; receives a first configuration information block in step 102, wherein the configuration information block is used for determining a first resource set and a second resource set; and sends a first CSI in step 103, wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

As an embodiment, the first information block is carried by higher layer signaling.

As an embodiment, the first information block is carried by Radio Resource Control (RRC) signaling.

As an embodiment, the first information block includes information in all or part of fields in one RRC Information Element (IE).

As an embodiment, the first information block includes information in all or part of fields in each of a plurality of RRC IEs.

As oan embodiment, the first information block includes information in all or part of fields in a TDD-UL-DL-ConfigCommon IE.

As an embodiment, the first information block includes information in all or part of fields in a TDD-UL-DL-ConfigDedicated IE.

As an embodiment, the first information block includes information in all or part of fields in a ServingCellConfig IE.

As an embodiment, the first information block includes information in all or part of fields in a ServingCellConfigCommonSIB IE.

As an embodiment, the first information block includes information in all or part of fields in a ServingCellConfigCommon IE.

As an embodiment, the first information block is carried by at least one RRC IE.

As an embodiment, the first information block is carried by a TDD-UL-DL-ConfigCommon IE.

As an embodiment, the first information block is carried by a TDD-UL-DL-ConfigDedicated IE.

As an embodiment, the first information block is carried by a ServingCellConfig IE.

As an embodiment, the first information block is carried by a ServingCellConfigCommonSIB IE.

As an embodiment, the first information block is carried by a ServingCellConfigCommon IE.

As an embodiment, the first information block is carried by a Medium Access Control Layer Control Element (MAC CE).

As an embodiment, the first information block includes a MAC CE.

As an embodiment, the first information block is carried by Downlink Control Information (DCI).

As an embodiment, the first information block includes DCI.

As an embodiment, the first information block includes information in one or more fields in one piece of DCI.

As an embodiment, the first information block is carried by DCI format 2_0.

As an embodiment, the first information block includes DCI format 2_0.

As an embodiment, the first information block is jointly carried by RRC signaling and a MAC CE.

As an embodiment, the first information block is jointly carried by higher layer signaling and DCI.

As an embodiment, for specific definitions of a TDD-UL-DL-ConfigCommon IE, a TDD-UL-DL-ConfigDedicated IE, a ServingCellConfig IE, a ServingCellConfigCommonSIB IE, and a ServingCellConfigCommon IE, refer to Section 6.3.2 of 3GPP TS 38.331.

As an embodiment, for a specific definition of DCI format 2_0, refer to Section 7.3.1 of 3GPP TS 38.212.

As an embodiment, the symbol includes a single-carrier symbol.

As an embodiment, the symbol includes a multi-carrier symbol.

As an embodiment, the symbol includes an Orthogonal Frequency Division Multiplexing (OFDM) symbol.

As an embodiment, the symbol is an OFDM symbol.

As an embodiment, the symbol includes a Discrete Fourier Transform Spread OFDM (DFT-S-OFDM) symbol.

As an embodiment, the symbol is obtained after OFDM symbol generation is performed on an output of transform precoding.

As an embodiment, the symbol includes a Cyclic Prefix (CP).

As an embodiment, the first time domain resource includes one symbol.

As an embodiment, the first time domain resource includes a plurality of symbols.

As an embodiment, at least one symbol in the first time domain resource is configured for both uplink and downlink.

As an embodiment, each symbol in the first time domain resource is configured for both uplink and downlink.

As an embodiment, at least one symbol in the first time domain resource is used for both uplink and downlink.

As an embodiment, each symbol in the first time domain resource is used for both uplink and downlink.

As an embodiment, at least one symbol in the first time domain resource is configured for uplink in part of Resource Blocks (RBs) and configured for downlink in another part of RBs.

As an embodiment, at least one symbol in the first time domain resource is used for uplink in part of RBs and used for downlink in another part of RBs.

As an embodiment, each symbol in the first time domain resource is configured for uplink in part of RBs and configured for downlink in another part of RBs.

As an embodiment, each symbol in the first time domain resource is used for uplink in part of RBs and for downlink in another part of RBs.

As an embodiment, at least one symbol in the first time domain resource is configured for uplink in part of RBs in a same cell and configured for downlink in another part of RBs in the same cell.

As an embodiment, at least one symbol in the first time domain resource is used for uplink in part of RBs in a same cell and used for downlink in another part of RBs in the same cell.

As an embodiment, each symbol in the first time domain resource is configured for uplink in part of RBs in a same cell and configured for downlink in another part of RBs in the same cell.

As an embodiment, each symbol in the first time domain resource is used for uplink in part of RBs in a same cell and used for downlink in another part of RBs in the same cell.

As an embodiment, the same cell is a cell in which the first resource set is located.

As an embodiment, the same cell is a cell in which the second resource set or the third resource set is located.

As an embodiment, at least one symbol in the first time domain resource is configured as DownLink (DL) by a seventh information block and is configured for uplink in a second frequency domain resource.

As an embodiment, each symbol in the first time domain resource is configured as DL or Flexible by a seventh information block and is configured for uplink in a second frequency domain resource.

As an embodiment, at least one symbol in the first time domain resource is configured as DL on a first cell by a seventh information block, and is used for uplink in a second frequency domain resource, and the second frequency domain resource belongs to at least one Bandwidth Part (BWP) of the first cell.

As an embodiment, each symbol in the first time domain resource is configured as DL or Flexible on a first cell by a seventh information block, and is used for uplink in a second frequency domain resource, and the second frequency domain resource belongs to at least one BWP of the first cell.

As an embodiment, the second frequency domain resource belongs to at least one DL BWP of the first cell.

As an embodiment, at least one symbol in the first time domain resource is configured as DL on a first cell by a seventh information block, and is used for downlink only in a third frequency domain resource in a first BWP, the first BWP is a DL BWP of the first cell, and the third frequency domain resource only includes part of RBs in the first BWP.

As an embodiment, each symbol in the first time domain resource is configured as DL or Flexible on a first cell by a seventh information block, and is used for downlink only in a third frequency domain resource in a first BWP, the first BWP is a DL BWP of the first cell, and the third frequency domain resource only includes part of RBs in the first BWP.

As an embodiment, the first cell is a cell in which the first resource set is located.

As an embodiment, the first cell is a cell in which the first configuration information block is configured to locate.

As an embodiment, the first cell is a cell including the first configuration information block.

As an embodiment, the first cell is a cell in which the first information block is configured to locate.

As an embodiment, the first cell is a cell including the first information block.

As an embodiment, the first cell is a cell in which the second resource set or the third resource set is located.

As an embodiment, the first cell is a cell configured by a ServingCellConfig IE carrying the first configuration information block.

As an embodiment, the first cell is a cell configured by a ServingCellConfig IE, or SpCellConfig, or SCellConfig that carries the first information block.

As an embodiment, the first information block is a cell identified by a cell index included by a ServingCellConfigCommon IE carrying the seventh information block.

As an embodiment, the cell index is one of a Physical Cell Identifier (PCI), ServCellIndex, SCellIndex, or AdditionalPCIIndex.

As an embodiment, for the PCI, ServCellIndex, SCellIndex, and AdditionalPCIIndex, specifically refer to 3GPP TS 38.331.

As an embodiment, the seventh information block is carried by an RRC IE.

As an embodiment, a name of an RRC IE carrying the seventh information block includes "TDD-UL-DL-Config".

As an embodiment, the seventh information block is carried by a TDD-UL-DL-ConfigCommon IE.

As an embodiment, the seventh information block is a TDD-UL-DL-ConfigCommon IE.

As an embodiment, the first time domain resource includes a symbol used for full-duplex/SBFD.

As an embodiment, each symbol in the first time domain resource is used for full-duplex/SBFD.

As an embodiment, the problem to be solved by the present application includes: in a system supporting full duplex/SBFD or a system supporting uplink and downlink transmission in a same symbol, how to determine a resource used for an interference measurement and that is associated with the first CSI. In the above-mentioned method, the resource used for the measurement that is associated with the first CSI depends on the first time domain resource, which solves the problem.

As an embodiment, the benefits of the above-mentioned method include: in a system supporting full duplex/SBFD or a system supporting uplink and downlink transmission in a same symbol, more accurately measuring interference, and improving accuracy of a CSI report, thereby improving overall performance of the system.

As an embodiment, any symbol that does not belong to the first time domain resource is used only for uplink or only for downlink.

As an embodiment, any symbol that does not belong to the first time domain resource is configured only for uplink or only for downlink.

As an embodiment, any symbol that does not belong to the first time domain resource is used, in the first cell, only for uplink or only for downlink.

As an embodiment, any symbol that does not belong to the first time domain resource is configured, in the first cell, only for uplink or only for downlink.

As an embodiment, the essence of the above-mentioned method includes: symbols in the first time domain resource and symbols outside the first time domain resource are symbols of different duplex types separately. In the above-mentioned method, a resource used for an interference measurement depends on a duplex type of a symbol. The benefits of the above-mentioned method include: more flexibly configuring the resource used for the interference measurement according to requirements, more accurately performing the interference measurement on symbols of different duplex types, and improving accuracy of a CSI report and system performance.

As an embodiment, the symbols of different duplex types refer to: symbols configured for both uplink and downlink and symbols configured for only uplink or only downlink.

As an embodiment, the symbols of different duplex types refer to: symbols used for both uplink and downlink and symbols used for only uplink or only downlink.

As an embodiment, the first information block indicates the first time domain resource.

As an embodiment, the first information block explicitly indicates the first time domain resource.

As an embodiment, the first information block implicitly indicates the first time domain resource.

As an embodiment, the first information block indicates which symbols belong to the first time domain resource.

As an embodiment, the first information block configures a symbol in the first time domain resource as a first type.

As an embodiment, the first information block indicates the first time domain resource by configuring a symbol in the first time domain resource as a first type.

As an embodiment, the first type is different from uplink and downlink.

As an embodiment, the first type is different from uplink, downlink, and Flexible.

As an embodiment, the first type is different from sidelink.

As an embodiment, the first information block indicates the first time domain resource by configuring a frequency domain resource used for uplink for a symbol configured as DL or Flexible by the seventh information block.

As an embodiment, the first information block configures a symbol in the first time domain resource to uplink in the second frequency domain resource.

As an embodiment, the first configuration information block is used for configuring one Channel State Information (CSI) report.

As an embodiment, a CSI report configured by the first configuration information block is periodic.

As an embodiment, a CSI report configured by the first configuration information block is semi-persistent.

As an embodiment, a CSI report configured by the first configuration information block is aperiodic.

As an embodiment, the first configuration information block is carried by higher layer signaling.

As an embodiment, the first configuration information block is carried by Radio Resource Control (RRC) signaling.

As an embodiment, the first configuration information set is carried by at least one RRC Information Element (IE).

As an embodiment, the first configuration information block includes information in all or part of fields in each of a plurality of RRC IEs.

As an embodiment, the first configuration information block is one RRC IE.

As an embodiment, the first configuration information block is one RRC IE, and a name of the first configuration information block includes "CSI-ReportConfig".

As an embodiment, the first configuration information block includes information in all or part of fields in one CSI-ReportConfig IE.

As an embodiment, the first configuration information block is one CSI-ReportConfig IE.

As an embodiment, the first configuration information block includes information in all or part of fields of one CSI-ReportConfig IE and information in all or part of fields of at least one CSI-ResourceConfig IE.

As an embodiment, the first configuration information block includes information in all or part of fields in an CSI-MeasConfig IE.

As an embodiment, the first information block and the first configuration information block are configured to a same cell.

As an embodiment, the first information block and the first configuration information block are configured by same SpCellConfig or SCellConfig.

As an embodiment, for specific definitions of the CSI-ReportConfig IE, the CSI-ResourceConfig IE, the CSI-MeasConfig IE, SpCellConfig, and SCellConfig, refer to Section 6.3.2 of 3GPP TS 38.331.

As an embodiment, the first resource set is a Non-Zero-Power (NZP) Channel State Information-Reference Signal (CSI-RS) resource set or a Synchronization Signal Block (CSI-SSB) resource set.

As an embodiment, the first resource set is identified by one NZP-CSI-RS-ResourceSetId or one CSI-SSB-ResourceSetId.

As an embodiment, the first resource set includes at least one resource.

As an embodiment, the first resource set includes only one resource.

As an embodiment, the first resource set includes a plurality of resources.

As an embodiment, any resource in the first resource set is an NZP CSI-RS resource or a Synchronisation Signal/Physical Broadcast Channel (SS/PBCH) block resource.

As an embodiment, any resource in the first resource set is identified by one NZP-CSI-RS-ResourceId or one SSB-Index.

As an embodiment, the first node obtains, based on only the first resource set, a channel measurement for calculating the first CSI.

As an embodiment, the first node obtains, based on only a part that is of the first resource set and that is not later than a CSI reference resource of the first CSI, a channel measurement for calculating the first CSI.

As an embodiment, the first node obtains, based on only a most recent transmission occasion that is of the first resource set and that is not later than a CSI reference resource of the first CSI, a channel measurement for calculating the first CSI.

As an embodiment, the first node obtains, by measuring a reference signal in all or part of resources in the first resource set, a channel measurement for calculating the first CSI.

As an embodiment, for any resource in the first resource set, the first node measures an RS only in part of RBs which the resource is across to obtain a channel measurement for calculating the first CSI.

As an embodiment, for any resource in the first resource set, the first node measures an RS in all RBs which the resource is across to obtain a channel measurement for calculating the first CSI.

Generally speaking, how to obtain a channel measurement and an interference measurement, and how to calculate CSI are determined by hardware equipment manufacturers themselves. Some non-limiting embodiments are introduced below.

As an embodiment, the first node obtains channel information by measuring a signal transmitted in the first resource set, and the channel information includes but is not limited to one or more of a channel parameter matrix,***H**_{w}*, *w* = 1, ... , *W* a channel correlation matrix, received power, Reference Signal Received Power (RSRP), or a phase, wherein a dimension of the ***H**_{w}* is *R* × *T*, and the *T* and the *R* are a quantity of transmit antenna ports and a quantity of receive antennas, respectively.

As an embodiment, the first node obtains interference information by measuring a signal transmitted in at least one of the second resource set or the third resource set; and the interference information includes but is not limited to received power or an interference correlation matrix.

As an embodiment, the first node obtains the first CSI by performing an operation on the channel information and the interference information, wherein the operation includes but is not limited to one or more of mathematical operation, matrix decomposition, averaging, filtering, quantization, or table lookup.

As an embodiment, the first node obtains a precoded equivalent channel ***P**_{w}*, *w* = 1, ..., *W, **P**_{w}* = ***H**_{w} · **V**_{w}* under a condition of adopting a precoding matrix ***V**_{w}, w = 1, ..., W* for a channel parameter matrix, wherein a dimension of the ***V**_{w}* is *T* × *L*, and the *L* is a rank or a number of layers;A equivalent channel capacity of ***P**_{w}, w =* 1, *... , W* is calculated using the criteria such as SINR, Exponential Effective SINR Mapping (EESM), or Received Block Mean Mutual Information Ratio (RBIR) with reference to an interference signal and noise information, and then a CQI is determined by the equivalent channel capacity through table lookup or the like.In general, the direct mapping of a value of the CQI depends on receiver performance, or hardware-related factors such as a modulation scheme. The precoding matrix***W***_{*t*×*l*} is typically fed back by the first node through RI or PMI.

As an embodiment, the second resource set is an NZP CSI-RS resource set or a Channel State Information-Interference Measurement (CSI-IM) resource set.

As an embodiment, the second resource set is identified by one NZP-CSI-RS-ResourceSetId or one CSI-IM-ResourceSetld.

As an embodiment, the second resource set includes at least one resource.

As an embodiment, the second resource set includes only one resource.

As an embodiment, the second resource set includes a plurality of resources.

As an embodiment, any resource in the second resource set is an NZP CSI-RS resource or a CSI-IM resource.

As an embodiment, the second resource set includes at least one resource, and any resource in the second resource set is identified by one NZP-CSI-RS-ResourceId or one CSI-IM-ResourceId.

As an embodiment, the third resource set includes at least one resource.

As an embodiment, the third resource set includes only one resource.

As an embodiment, the third resource set includes a plurality of resources.

As an embodiment, the third resource set is an NZP CSI-RS resource set or a CSI-IM resource set.

As an embodiment, the third resource set is identified by one NZP-CSI-RS-ResourceSetId or one CSI-IM-ResourceSetld.

As an embodiment, any resource in the third resource set is an NZP CSI-RS resource or a CSI-IM resource.

As an embodiment, any resource in the third resource set is identified by one NZP-CSI-RS-ResourceSetId or one CSI-IM-ResourceSetId.

As an embodiment, the benefits of the above-mentioned method include: The method makes little change to an existing CSI report architecture in a standard, and is easy to implement.

As an embodiment, the benefits of the above-mentioned method include: different resource configurations to meet requirements of symbols of different duplex types, thereby improving accuracy of an interference measurement, accuracy of a CSI report, and system performance.

As an embodiment, the third resource set is a group of Sounding Reference Signal (SRS) resources, or a group of Received Signal Strength Indicator (RSSI) resources.

As an embodiment, the third resource set is a group of SRS resources for a Cross Link Interference (CLI) measurement, or a group of RSSI resources for a CLI measurement.

As an embodiment, one group of SRS resources includes one or more SRS resources, and one group of RSSI resources includes one or more RSSI resources.

As an embodiment, any resource in the third resource set is an SRS resource or an RSSI resource.

As an embodiment, any resource in the third resource set is an SRS resource for a CLI measurement or an RSSI resource for a CLI measurement.

As an embodiment, any resource in the third resource set is identified by one SRS-ResourceId or one RSSI-ResourceId.

As an embodiment, the benefits of the above-mentioned method include: making full use of various interference measurement resources defined by existing standards to improve accuracy of an interference measurement.

As an embodiment, the benefits of the above-mentioned method include: improving accuracy of an interference measurement on a symbol in the first time domain resource, thereby improving accuracy of a CSI report and system performance.

As an embodiment, the third resource set is an NZP CSI-RS resource set, a CSI-IM resource set, a group of SRS resources, or a group of RSSI resources.

As an embodiment, the third resource set is an NZP CSI-RS resource set, a CSI-IM resource set, a group of SRS resources for a CLI measurement, or a group of RSSI resources for a CLI measurement.

As an embodiment, any resource in the third resource set is an NZP CSI-RS resource, a CSI-IM resource, an SRS resource, or an RSSI resource.

As an embodiment, a quantity of resources included in the first resource set is equal to a quantity of resources included in the second resource set.

As an embodiment, a quantity of resources included in the first resource set is equal to a quantity of resources included in the third resource set.

As an embodiment, the first resource set, the second resource set, and the third resource set include a same quantity of resources.

As an embodiment, the first resource set, the second resource set, and the third resource set are separately identified by different IDs.

As an embodiment, the ID of the first resource set is NZP-CSI-RS-ResourceSetId or CSI-SSB-ResourceSetId; the ID of the second resource set is NZP-CSI-RS-ResourceSetId or CSI-IM-ResourceSetId; and the ID of the third resource set is NZP-CSI-RS-ResourceSetId or CSI-IM-ResourceSetld.

As an embodiment, the second resource set and the third resource set are configured to a same Bandwidth Part (BWP).

As an embodiment, the second resource set and the third resource set are configured to a same cell.

As an embodiment, the second resource set and the third resource set are located in a same carrier.

As an embodiment, the first resource set, the second resource set, and the third resource set are configured to a same BWP.

As an embodiment, the first resource set, the second resource set, and the third resource set are configured to a same cell.

As an embodiment, the first resource set, the second resource set, and the third resource set are located in a same carrier.

As an embodiment, Resource Blocks (RBs) that any two resources in the first resource set are across completely overlap.

As an embodiment, RBs having two resources across in the first resource set partially overlap.

As an embodiment, an RB which any resource in the first resource set is across is configured through a higher layer parameter.

As a sub-embodiment of the above-mentioned embodiment, any resource in the first resource set is an NZP CSI-RS resource, and an RB which any resource in the first resource set is across is configured through a higher layer parameter "CSI-FrequencyOccupation".

As an embodiment, all RBs that any resource in the first resource set is across are continuous in frequency domain.

As an embodiment, each resource in the first resource set is an NZP CSI-RS resource. For any resource in the first resource set, if a density of the resource is not less than 1, an RB occupied by the resource is an RB which the resource is across; or if the density of the resource is 0.5, the resource only occupies an odd RB among RBs that the resource is across, or only occupies an even RB among the RBs that the resource is across.

As an embodiment, each resource in the first resource set is an SS/PBCH Block resource; and an RB occupied by any resource in the first resource set is a Physical Resource Block (PRB) that the resource is across.

As an embodiment, RBs that any two resources in the second resource set are across completely overlap.

As an embodiment, RBs having two resources across in the second resource set partially overlap.

As an embodiment, an RB which any resource in the second resource set is across is configured through a higher layer parameter.

As a sub-embodiment of the above-mentioned embodiment, an RB which any resource in the second resource set is across is configured through a higher layer parameter "CSI-FrequencyOccupation".

As an embodiment, all RBs that any resource in the second resource set is across are continuous in frequency domain.

As an embodiment, each resource in the second resource set is an NZP CSI-RS resource. For any resource in the second resource set, if a density of the resource is not less than 1, an RB occupied by the resource is an RB which the resource is across; or if the density of the resource is 0.5, the resource only occupies an odd RB among RBs that the resource is across, or only occupies an even RB among the RBs that the resource is across.

As an embodiment, each resource in the second resource set is a CSI-IM resource; and an RB occupied by any resource in the second resource set is an RB which the resource is across.

As an embodiment, RBs that any two resources in the third resource set are across completely overlap.

As an embodiment, RBs having two resources in across in the third resource set partially overlap.

As an embodiment, an RB which any resource in the third resource set is across is configured through a higher layer parameter.

As a sub-embodiment of the above-mentioned embodiment, any resource in the third resource set is an NZP CSI-RS resource or a CSI-IM resource, and an RB which any resource in the third resource set is across is configured through a higher layer parameter "CSI-FrequencyOccupation".

As an embodiment, all RBs that any resource in the third resource set is across are continuous in frequency domain.

As an embodiment, each resource in the third resource set is an NZP CSI-RS resource. For any resource in the third resource set, if a density of the resource is not less than 1, an RB occupied by the resource is an RB which the resource is across; or if the density of the resource is 0.5, the resource only occupies an odd RB among RBs that the resource is across, or only occupies an even RB among the RBs that the resource is across.

As an embodiment, each resource in the third resource set is a CSI-IM resource; and an RB occupied by any resource in the third resource set is an RB which the resource is across.

As an embodiment, each resource in the third resource set is an SRS resource, an RB occupied by any resource in the third resource set is an RB which the resource is across.

As an embodiment, each resource in the third resource set is an RSSI resource, an RB occupied by any resource in the third resource set is an RB which the resource is across.

As an embodiment, RBs that the second resource set is across and RBs that the third resource set is across partially overlap.

As an embodiment, the benefits of the above-mentioned method include: better matching available bandwidth of symbols of different duplex types.

As an embodiment, an RB which any resource in the second resource set is across and an RB which any resource in the third resource set is across partially overlap.

As an embodiment, there is one resource in the second resource set that is across an RB partially overlapping an RB which one resource in the third resource set is across.

As an embodiment, an RB which each resource of the second resource set is across includes an RB belonging to the second frequency domain resource.

As an embodiment, an RB which at least one resource of the second resource set is across includes an RB belonging to the second frequency domain resource.

As an embodiment, an RB which each resource of the third resource set is across does not include an RB belonging to the second frequency domain resource.

As an embodiment, an RB which at least one resource of the third resource set is across does not include an RB belonging to the second frequency domain resource.

As an embodiment, the first configuration information block indicates the first resource set and the second resource set.

As an embodiment, the first configuration information block indicates an ID of the first resource set and an ID of the second resource set.

As an embodiment, the first configuration information block indicates P resource sets, and the P is a positive integer greater than 1; and the first resource set is one of the P resource sets.

As an embodiment, the first configuration information block sequentially indicates the P resource sets.

As an embodiment, the first configuration information block indicates a first information sub-block, and the first information sub-block indicates the first resource set; and the first information sub-block is carried by at least one RRC IE.

As an embodiment, the first information sub-block is carried by a CSI-ResourceConfig IE.

As an embodiment, the first information sub-block is a CSI-ResourceConfig IE.

As an embodiment, the first information sub-block is a CSI-ResourceConfig IE, and the first configuration information block indicates CSI-ResourceConfigId of the CSI-ResourceConfig IE.

As an embodiment, the first information sub-block indicates the P resource sets.

As an embodiment, the first information sub-block sequentially indicates the P resource sets.

As an embodiment, the first information sub-block sequentially indicates IDs of the P resource sets.

As an embodiment, an ID of any resource set in the P resource sets is one NZP-CSI-RS-ResourceSetId or CSI-SSB-ResourceSetId.

As an embodiment, a resourcesForChannelMeasurement field of the first configuration information block indicates the first information sub-block.

As an embodiment, the second information block indicates the first resource set from the P resource sets.

As an embodiment, a value of a resourcesForChannel field of the second information block is equal to i, and the first resource set is an i^{th} resource set among the P resource sets.

As an embodiment, the third information block indicates the first resource set from the P resource sets.

As an embodiment, a value of a resourcesForChannel field of the third information block is equal to i, and the first resource set is an i^{th} resource set among the P resource sets.

As an embodiment, a csi-IM-ResourcesForlnterference field or nzp-CSI-RS-ResourcesForlnterference of the first configuration information block indicates the second resource set.

As an embodiment, the first configuration information block is used for determining the third resource set.

As an embodiment, the first configuration information block indicates the third resource set.

As an embodiment, the first configuration information block first indicates the second resource set, and then indicates the third resource set.

As an embodiment, the benefits of the above-mentioned method include: enabling a sender of the first configuration information block and the first node to have no misunderstanding on the second resource set and the third resource set.

As an embodiment, a csi-IM-ResourcesForInterference field or nzp-CSI-RS-ResourcesForInterference of the first configuration information block indicates the third resource set.

As an embodiment, the first configuration information block is used for configuring one CSI report, and the first configuration information block indicates that the third resource set is a candidate of a resource set used for obtaining an interference measurement for calculating CSI related to the one CSI report.

As an embodiment, the first configuration information block is used for configuring one CSI report, and the first configuration information block indicates that a resource in the third resource set is a candidate of a resource used for obtaining an interference measurement for calculating CSI related to the one CSI report.

As an embodiment, the first configuration information block indicates each resource in the third resource set.

As an embodiment, the first configuration information block does not indicate the third resource set.

As an embodiment, the first configuration information block does not indicate any resource in the third resource set.

As an embodiment, the first configuration information block does not indicate the third resource set, nor indicates any resource in the third resource set.

As an embodiment, the third resource set is shared by configurations of a plurality of CSI report, and the plurality of CSI reports include the one CSI report that the first configuration information block is used for configuring.

As an embodiment, the third resource set is shared by CSI reports configured in a first cell.

As an embodiment, the third resource set is shared by CSI reports configured in each cell in a cell group to which a first cell belongs.

As an embodiment, the first cell is a cell in which the first resource set is located.

As an embodiment, the first cell is a cell in which the first configuration information block is configured to locate.

As an embodiment, the first cell is a cell in which the first information block is configured to locate.

As an embodiment, a cell group to which the first cell belongs is a cell group configured by a CellGroupConfig IE to which SCellConfig or SpCellConfig that configures the first cell belongs.

As an embodiment, for SCellConfig, SpCellConfig, and the CellGroupConfig IE, specifically refer to Section 6.3.2 of 3GPP TS 38.331.

As an embodiment, a cell group to which the first cell belongs is a Master Cell Group (MCG) or a Secondary Cell Group (SCG) of the first node.

As an embodiment, the benefits of the above-mentioned method include: saving signaling configuration overhead.

As an embodiment, the first configuration information block indicates the first resource set, the second resource set, and the third resource set.

As an embodiment, the first configuration information block indicates an ID of the first resource set, an ID of the second resource set, and an ID of the third resource set.

As an embodiment, the first configuration information block is used for configuring one CSI report, and the first CSI includes CSI related to the one CSI report.

As an embodiment, the first configuration information block is used for configuring one CSI report, and the first CSI is CSI related to the one CSI report.

As an embodiment, the first CSI includes one or more of a Channel Quality Indicator (CQI), a Precoding Matrix Indicator (PMI), a CSI-RS Resource Indicator (CRI), an SS/PBCH Block Resource Indicator (SSBRI), an Layer Indicator (LI), an Rank Indicator (RI), an Layer 1 Reference Signal Received Power (L1-RSRP), an Layer 1 Signal-to-Interference and Noise Ratio (L1-SINR), or CapabilityIndex.

As an embodiment, only one resource set of the second resource set or the third resource set is used for obtaining an interference measurement for calculating the first CSI.

As an embodiment, that whether the third resource set is used for obtaining an interference measurement for calculating the first CSI depends on the first time domain resource means that only one resource set of the second resource set or the third resource set is used for obtaining the interference measurement for calculating the first CSI, and which resource set of the second resource set and the third resource set is used for obtaining the interference measurement for calculating the first CSI depends on the first time domain resource.

As an embodiment, only the second resource set of the second resource set or the third resource set is used for obtaining an interference measurement for calculating the first CSI, or both the second resource set and the third resource set are used together for obtaining the interference measurement for calculating the first CSI.

As an embodiment, that whether the third resource set is used for obtaining an interference measurement for calculating the first CSI depends on the first time domain resource means that only the second resource set of the second resource set or the third resource set is used for obtaining the interference measurement for calculating the first CSI, or both the second resource set and the third resource set are used together for obtaining the interference measurement for calculating the first CSI; and whether only one or both of the second resource set and the third resource set are used for obtaining the interference measurement for calculating the first CSI depends on the first time domain resource.

As an embodiment, the first information block is transmitted on a Physical Downlink Shared Channel (PDSCH).

As an embodiment, the first configuration information block is transmitted on a PDSCH.

As an embodiment, the first CSI is transmitted in a Physical Uplink Shared Channel (PUSCH).

As an embodiment, the first CSI is transmitted in a Physical Downlink Control Channel (PUCCH).

### Embodiment 2

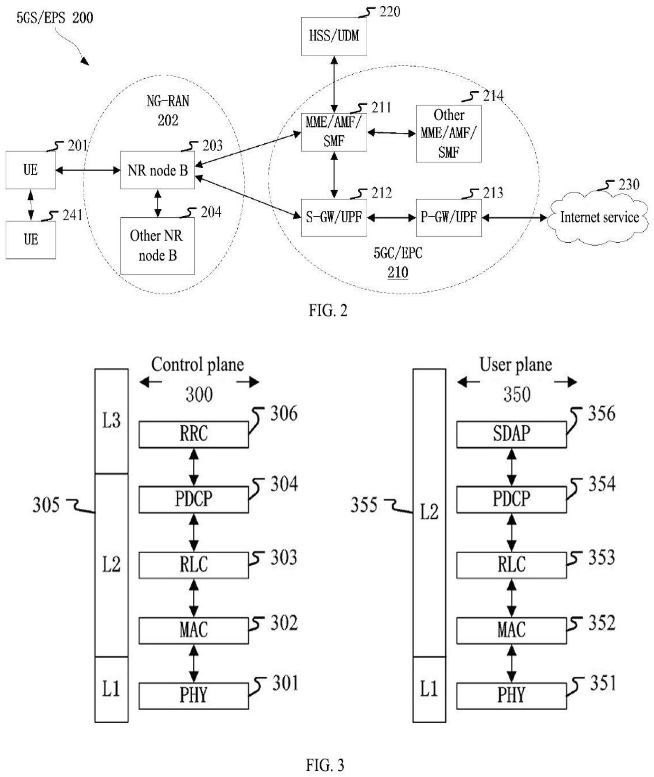

Embodiment 2 illustrates a schematic diagram of a network architecture according to an embodiment of the present application, as shown in FIG. 2.

FIG. 2 indicates a network architecture 200 of Long-Term Evolution (LTE), Long-Term Evolution Advanced (LTE-A) and a future 5G system. The network architecture 200 of LTE, LTE-A and the future 5G system is referred to as an Evolved Packet System (EPS) 200. The network architecture 200 of 5G NR or LTE may be referred to as a 5G System (5GS)/ Evolved Packet System (EPS) 200 or some other suitable terminologies. The 5GS/EPS 200 may comprise one or more User Equipments (UEs) 201, a UE 241 that performs sidelink communication with the UE 201, an next Generation-Radio Access Network (NG-RAN) 202, a 5G Core Network (5GC)/Evolved Packet Core (EPC) 210, a Home Subscriber Server (HSS)/Unified Data Management (UDM) 220, and an Internet service 230. The 5GS/EPS 200 may be interconnected with other access networks, but these entities/interfaces are not shown for simplicity. As shown in FIG. 2, the 5GS/EPS 200 provides a packet switching service, but those skilled in the art will readily appreciate that various concepts presented throughout the present application can be extended to networks that provide circuit switching services. The NG-RAN 202 comprises a New Radio (NR) node B (gNB) 203 and other gNBs 204. The gNB 203 provides user and control plane protocol termination towards the UE 201. The gNB 203 may be connected to other gNBs 204 via an Xn interface (e.g., backhaul). The gNB 203 may alternatively be referred to as a base station, a base transceiver station, a radio base station, a radio transceiving device, a transceiving device function, a Basic Service Set (BSS), an Extended Service Set (ESS), a Transmitter Receiver Point (TRP), or another suitable term. The gNB 203 provides an access point to the 5GC/EPC 210 for the UE 201. Examples of the UE 201 include a cellular phone, a smart phone, a Session Initiation Protocol (SIP) phone, a laptop, a Personal Digital Assistant (PDA), a satellite radio, a global positioning system, a multimedia apparatus, a video apparatus, a digital audio player (for example, an MP3 player), a camera, a game console, a drone, an aircraft, a narrowband physical network device, a machine type communication device, a land vehicle, an automobile, a wearable device, or any other similar functional apparatuses. Those skilled in the art may also refer to the UE 201 as a mobile station, a subscriber station, a mobile element, a subscriber element, a wireless element, a remote element, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB 203 is connected to the 5GC/EPC 210 through an S1/NG interface. The 5GC/EPC 210 comprises a Mobility Management Entity (MME)/Authentication Management Field (AMF)/Session Management Function (SMF) 211, other MME/AMF/SMF 214, a Service Gateway (S-GW)/User Plane Function (UPF) 212, and a Packet Data Network Gateway (P-GW)/UPF 213. The MME/AMF/SMF 211 is a control node that processes signaling between the UE 201 and the 5GC/EPC 210. Generally, the MME/AMF/SMF 211 provides bearers and connection management. All user Internet Protocol (IP) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet service 230. The Internet service 230 comprises operator-corresponding Internet protocol services, which may specifically comprise Internet, Intranet, an IP Multimedia Subsystem (IMS) and packet switching services.

As an embodiment, the first node in the present application includes the UE 201.

As an embodiment, the second node in the present application includes the gNB 203.

As an embodiment, a radio link between the UE 201 and the gNB 203 comprises a cellular network link.

As an embodiment, a sender of the first information block includes the gNB 203.

As an embodiment, a recipient of the first information block includes the UE 201.

As an embodiment, a sender of the first configuration information block includes the gNB 203.

As an embodiment, a recipient of the first configuration information block includes the UE 201.

As an embodiment, a recipient of the first CSI comprises the gNB 203.

As an embodiment, a sender of the first CSI comprises the UE 201.

As an embodiment, a sender of the second information block includes the gNB 203.

As an embodiment, a recipient of the second information block includes the UE 201.

As an embodiment, a sender of the third information block includes the gNB 203.

As an embodiment, a recipient of the third information block includes the UE 201.

As an embodiment, senders of the fourth information block and the fifth information block include the gNB 203.

As an embodiment, recipients of the fourth information block and the fifth information block include the UE 201.

As an embodiment, the gNB 203 supports SBFD.

As an embodiment, the gNB 203 supports a more flexible duplex mode or a full-duplex mode.

As an embodiment, the UE 201 supports the SBFD.

As an embodiment, the UE 201 supports a more flexible duplex mode or a full-duplex mode.

### Embodiment 3

Embodiment 3 illustrates a schematic diagram of an embodiment of a radio protocol architecture for a user plane and a control plane according to an embodiment of the present application, as shown in FIG. 3.

Embodiment 3 shows a schematic diagram of an embodiment of a radio protocol architecture for a user plane and a control plane according to the present application, as shown in FIG. 3. FIG. 3 is a schematic diagram indicating an embodiment of a radio protocol architecture for a user plane 350 and a control plane 300, and FIG. 3 shows a radio protocol architecture for the control plane 300 between a first communication node device (UE, gNB or RSU in V2X) and a second communication node device (gNB, UE or RSU in V2X), or between two UEs using three layers: a Layer 1 (L1), a Layer 2 (L2) and a Layer 3 (L3). The Layer 1 (L1 layer) is the lowest layer and implements various PHY (physical layer) signal processing functions. The L1 layer will be referred to as a PHY301 herein. The Layer 2 (L2 layer) 305 is above the PHY 301 and is responsible for links between the first communication node device and the second communication node device or between the two UEs. The L2 layer 305 comprises a Medium Access Control (MAC) sublayer 302, a Radio Link Control (RLC) sublayer 303, and a Packet Data Convergence Protocol (PDCP) sublayer 304, and these sublayers are terminated at the second communication node device. The PDCP sublayer 304 provides multiplexing between different radio bearers and logical channels. The PDCP sublayer 304 also provides security by encrypting data packets and provides handover mobile support for the first communication node device between the second communication node devices. The RLC sublayer 303 provides segmentation and reassembly of upper layer data packets, retransmission of lost data packets, and reordering of data packets to compensate for unordered reception caused by an HARQ. The MAC sublayer 302 provides multiplexing between logical and transmission channels. The MAC sublayer 302 is also responsible for allocating various radio resources (e.g., resource blocks) in one cell between the first communication node devices. The MAC sublayer 302 is also responsible for HARQ operation. A Radio Resource Control (RRC) sublayer 306 in the layer 3 (L3 layer)in the control plane 300 is responsible for obtaining radio resources (i.e., radio bearers) and configuring a lower layer using RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 is substantially the same for the physical layer 351, the PDCP sublayer 354 in the L2 layer 355, the RLC sublayer 353 in the L2 layer 355, and the MAC sublayer 352 in the L2 layer 355 as for the corresponding layers and sublayers in the control plane 300, but the PDCP sublayer 354 also provides header compression for upper layer data packets to reduce the radio transmission overhead. The L2 layer 355 in the user plane 350 further comprises a Service Data Adaptation Protocol (SDAP) sublayer 356, and the SDAP sublayer 356 is responsible for mapping between a QoS (Quality of Service) flow and a Data Radio Bearer (DRB) to support the diversity of services. Although not shown, the first communication node device may have several upper layers above the L2 layer 355, comprising a network layer (e.g., an (IP) layer) terminated at the P-GW on a network side and an application layer terminated on the other end (e.g., a remote UE, a server, etc.) of connection.

As an embodiment, the radio protocol architecture in FIG. 3 is applicable to the first node in the present application.

As an embodiment, the radio protocol architecture in FIG. 3 is applicable to the second node in the present application.

As an embodiment, the first information block is generated in the RRC sublayer 306.

As an embodiment, the first information block is generated in the MAC sublayer 302 or the MAC sublayer 352.

As an embodiment, the first information block is generated in the PHY 301 or the PHY 351.

As an embodiment, the second information block is generated in the RRC sublayer 306.

As an embodiment, the second information block is generated in the MAC sublayer 302 or the MAC sublayer 352.

As an embodiment, the third information block is generated in the RRC sublayer 306.

As an embodiment, the third information block is generated in the MAC sublayer 302 or the MAC sublayer 352.

As an embodiment, the fourth information block is generated in the RRC sublayer 306.

As an embodiment, the fourth information block is generated in the MAC sublayer 302 or the MAC sublayer 352.

As an embodiment, the fifth information block is generated in the RRC sublayer 306.

As an embodiment, the fifth information block is generated in the MAC sublayer 302 or the MAC sublayer 352.

As an embodiment, the first configuration information block is generated in the RRC sublayer 306.

As an embodiment, the first CSI is generated at the PHY 301 or the PHY 351.

As an embodiment, the first signaling in the present application is generated in the PHY 301 or the PHY 351.

As an embodiment, the first signaling in the present application is generated in the MAC sublayer 302 or the MAC sublayer 352.

As an embodiment, the higher layer in the present application means a layer above the physical layer.

### Embodiment 4

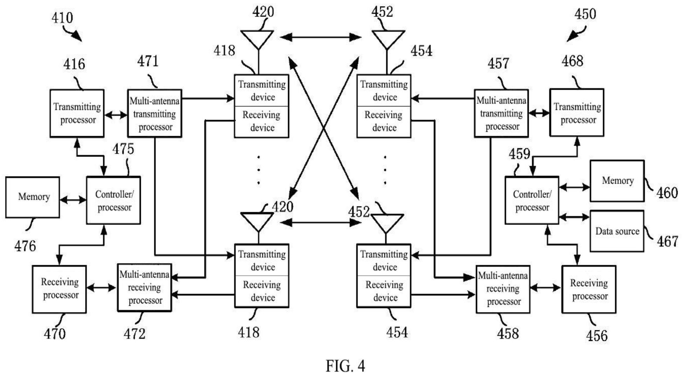

Embodiment 4 illustrates a schematic diagram of a first communication device and a second communication device according to an embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper layer data packets from a core network are provided to the controller/processor 475. The controller/processor 475 implements functionality of the L2 layer. In a DL, the controller/processor 475 provides header compression, encryption, packet segmentation and reordering, multiplexing between logical and transmission channels, and radio resource allocation to the second communication device 450 based on various priority metrics. The controller/processor 475 is also responsible for HARQ operation, retransmission of lost packets, and signaling to the second communication device 450. The transmitting processor 416 and the multi-antenna transmitting processor 471 implement various signal processing functions for the L1 layer (i.e., the physical layer). The transmitting processor 416 implements encoding and interleaving to facilitate Forward Error Correction (FEC) at the second communication device 450, as well as constellation mapping based on various modulation schemes (for example, Binary Phase Shift Keying (BPSK), Quadrature Phase Shift Keying (QPSK), M-phase Shift Keying (M-PSK), and M-quadrature Amplitude Modulation (M-QAM)). The multi-antenna transmitting processor 471 performs digital spatial precoding, comprising codebook-based precoding, non-codebook-based precoding, and beamforming processing, on coded and modulated symbols, to generate one or more parallel streams. The transmitting processor 416 then maps each parallel stream to a subcarrier, multiplexes the modulated symbols with a reference signal (for example, pilot) in time domain and/or frequency domain, and then uses an Inverse Fast Fourier Transform (IFFT) to generate a physical channel carrying a time-domain multi-carrier symbol stream. Then, the multi-antenna transmitting processor 471 performs transmitting analog precoding/beamforming operation on the time domain multi-carrier symbol stream. Each transmitting device 418 converts a baseband multi-carrier symbol stream provided by the multi-antenna transmitting processor 471 into a radio frequency stream, and then provides the radio frequency stream to the different antenna 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier and converts the radio frequency stream into a baseband multi-carrier symbol stream to provide the baseband multi-carrier symbol stream to the receiving processor 456. The receiving processor 456 and the multi-antenna receiving processor 458 implement various signal processing functions of the L1 layer. The multi-antenna receiving processor 458 performs receiving analog precoding/beamforming operation on the baseband multi-carrier symbol stream from the receiving device 454. The receiving processor 456 uses a Fast Fourier Transform (FFT) to convert the baseband multi-carrier symbol stream from a time domain to a frequency domain after the receiving analog precoding/beamforming operation. In the frequency domain, the physical layer data signal and the reference signal are demultiplexed by the receiving processor 456, wherein the reference signal will be used for channel estimation, and the data signal is used for recovering any parallel stream with the second communication device 450 as a destination after multi-antenna detection in the multi-antenna receiving processor 458. Symbols on each parallel stream are demodulated and recovered in the receiving processor 456, and soft decisions are generated. Then, the receiving processor 456 decodes and deinterleaves the soft decisions to recover upper layer data and control signals transmitted by the first communication device 410 on the physical channel. Then, the upper layer data and the control signals are provided to the controller/processor 459. The controller/processor 459 implements the functions of the L2 layer. The controller/processor 459 may be associated with the memory 460 that stores program codes and data. The memory 460 may be referred to as a computer-readable medium. In DownLink (DL), the controller/processor 459 provides demultiplexing between transport and logical channels, packet reassembly, decryption, header decompression, and control signal processing to recover the upper layer data packets from the core network. Then, the upper layer data packets are provided to all protocol layers above the L2 layer. Various control signals may also be provided to the L3 for L3 processing. The controller/processor 459 is further responsible for error detection using an acknowledgment (ACK) and/or negative acknowledgment (NACK) protocol to support the HARQ operation.

In transmission from the second communication device 450 to the first communication device 410, at the second communication device 450, the data source 467 is used to provide the upper layer data packets to the controller/processor 459. The data source 467 represents all protocol layers above the L2 layer. Similar to the transmission function at the first communication device 410 described in the DL, the controller/processor 459 implements header compression, encryption, packet segmentation and reordering, and multiplexing between logical and transmission channels based on radio resource allocation of the first communication device 410, and implements L2 layer functions for the user plane and the control plane. The controller/processor 459 is also responsible for HARQ operation, retransmission of lost packets, and signaling to the first communication device 410. The transmitting processor 468 performs modulation mapping and channel coding processing; the multi-antenna transmitting processor 457 performs digital multi-antenna spatial precoding, comprising codebook-based precoding, non-codebook-based precoding, and beamforming processing; and then, the transmitting processor 468 modulates the generated parallel streams into multi-carrier/single-carrier symbol streams, which are provided to the different antenna 452 via the transmitting device 454 after analog precoding/beamforming operation in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 are similar to the receiving functions at the second communication device 450 described in the transmission from the first communication device 410 to the second communication device 450. Each receiving device 418 receives a radio frequency signal through the corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with the memory 476 that stores program codes and data. The memory 476 may be referred to as a computer-readable medium. The controller/processor 475 provides multiplexing between transmission and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using the ACK and/or NACK protocol to support HARQ operation.

As an embodiment, the second communication device 450 comprises: at least one processor and at least one memory; the at least one memory comprises a computer program code; and the at least one memory and the computer program code are configured to be used together with the at least one processor. The second communication device 450 apparatus at least receives a first information block, wherein the first information block is used for determining a first time domain resource, and the first time domain resource comprises at least one symbol; receives a first configuration information block, wherein the first configuration information block is used for determining a first resource set and a second resource set; and sends first CSI, wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

As an embodiment, the second communication device 450 comprises: a memory storing a computer-readable instruction program, wherein the computer-readable instruction program generates actions when executed by at least one processor, and the actions include: receiving a first information block, wherein the first information block is used for determining a first time domain resource, and the first time domain resource comprises at least one symbol; receiving a first configuration information block, wherein the first configuration information block is used for determining a first resource set and a second resource set; and sending first CSI, wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

As an embodiment, the first communication device 410 comprises: at least one processor and at least one memory, wherein the at least one memory comprises a computer program code; and the at least one memory and the computer program code are configured to be used together with the at least one processor. The first communication device 410 apparatus at least sends a first information block, wherein the first information block is used for determining a first time domain resource, and the first time domain resource comprises at least one symbol; sends a first configuration information block, wherein the first configuration information block is used for determining a first resource set and a second resource set; and receives first CSI, wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

As an embodiment, the first communication device 410 comprises: a memory storing a computer-readable instruction program, wherein the computer-readable instruction program generates actions when executed by at least one processor, and the actions include: sending a first information block, wherein the first information block is used for determining a first time domain resource, and the first time domain resource comprises at least one symbol; sending a first configuration information block, wherein the first configuration information block is used for determining a first resource set and a second resource set; and receiving first CSI, wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

As an embodiment, the first node in the present application comprises the second communication device 450.

As an embodiment, the second node in the present application comprises the first communication device 410.

As an embodiment, at least one of {the antenna 452, the receiving device 454, the receiving processor 456, the multi-antenna receiving processor 458, the controller/processor 459, the memory 460, and the data source 467} is used for receiving the first configuration information block in the present application; and at least one of {the antenna 420, the transmitting device 418, the transmitting processor 416, the multi-antenna transmitting processor 471, the controller/processor 475, and the memory 476} is used for sending the first configuration information block in the present application.

As an embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As an embodiment, at least one of {the antenna 452, the receiving device 454, the receiving processor 456, the multi-antenna receiving processor 458, the controller/processor 459, the memory 460, and the data source 467} is used for receiving the second information block in the present application; and at least one of {the antenna 420, the transmitting device 418, the transmitting processor 416, the multi-antenna transmitting processor 471, the controller/processor 475, and the memory 476} is used for sending the second information block in the present application.

As an embodiment, at least one of {the antenna 452, the receiving device 454, the receiving processor 456, the multi-antenna receiving processor 458, the controller/processor 459, the memory 460, and the data source 467} is used for receiving the third information block in the present application; and at least one of {the antenna 420, the transmitting device 418, the transmitting processor 416, the multi-antenna transmitting processor 471, the controller/processor 475, and the memory 476} is used for sending the third information block in the present application.

As an embodiment, at least one of {the antenna 452, the receiving device 454, the receiving processor 456, the multi-antenna receiving processor 458, the controller/processor 459, the memory 460, and the data source 467} is used for receiving the fourth information block in the present application; and at least one of {the antenna 420, the transmitting device 418, the transmitting processor 416, the multi-antenna transmitting processor 471, the controller/processor 475, and the memory 476} is used for sending the fourth information block in the present application.

As an embodiment, at least one of {the antenna 452, the receiving device 454, the receiving processor 456, the multi-antenna receiving processor 458, the controller/processor 459, the memory 460, and the data source 467} is used for receiving the fifth information block in the present application; and at least one of {the antenna 420, the transmitting device 418, the transmitting processor 416, the multi-antenna transmitting processor 471, the controller/processor 475, and the memory 476} is used for sending the fifth information block in the present application.

As an embodiment, at least one of {the antenna 452, the transmitting device 454, the transmitting processor 468, the multi-antenna transmitting processor 457, the controller/processor 459, and the memory 460} is used for sending the first CSI in the present application; and at least one of {the antenna 420, the receiving device 418, the receiving processor 470, the multi-antenna receiving processor 472, the controller/processor 475, and the memory 476} is used for receiving the first CSI in the present application.

### Embodiment 5

Embodiment 5 illustrates a flowchart of transmission according to an embodiment of the present application, as shown in FIG. 5. In FIG. 5, a first node U01 and a second node N02 are respectively two communication nodes for transmission through an air interface, wherein the steps in dotted-line boxes F51 to F54 are optional respectively.

For **the first node U01,** a first information block is received in step S5101; a first configuration information block is received in step S5102; a second information block is received in step S5103; a third information block is received in step S5104; a fourth information block and a fifth information block are received in step S5105; first signaling is received in step S5106; and a first CSI is sent in step S5107.

For **the second node N02,** a first information block is sent in step S5201; a first configuration information block is sent in step S5202; a second information block is sent in step S5203; a third information block is sent in step S5204; a fourth information block and a fifth information block are sent in step S5205; first signaling is sent in step S5206; and a first CSI is received in step S5207.

In Embodiment 5, the first information block is used by the first node U01 for determining a first time domain resource, and the first time domain resource includes at least one symbol; the first configuration information block is used by the first node U01 for determining a first resource set and a second resource set; the first resource set is used by the first node U01 for obtaining a channel measurement for calculating the first CSI, and at least one of the second resource set or a third resource set is used by the first node U01 for obtaining an interference measurement for calculating the first CSI; and whether the third resource set is used by the first node U01 for obtaining the interference measurement for calculating the first CSI depends on the first time domain resource.

As an embodiment, the first node U01 is the first node in the present application.

As an embodiment, the second node N02 is the second node in the present application.

As an embodiment, an air interface between the second node N02 and the first node U01 comprises a wireless interface between a base station device and user equipment.

As an embodiment, the air interface between the second node N02 and the first node U01 comprises a radio interface between a relay node device and a user equipment.

As an embodiment, the air interface between the second node N02 and the first node U01 comprises a radio interface between a user equipment and a user equipment.

As an embodiment, the second node N02 is a serving cell maintenance base station of the first node U01.

As an embodiment, only one of the second resource set or the third resource set is used by the first node U01 for obtaining the interference measurement for calculating the first CSI, and which one of the second resource set and the third resource set is used by the first node U01 for obtaining the interference measurement for calculating the first CSI depends on the first time domain resource.

As an embodiment, only the second resource set among the second resource set and the third resource set is used by the first node U01 for obtaining the interference measurement for calculating the first CSI, or both the second resource set and the third resource set are used by the first node U01 for obtaining the interference measurement for calculating the first CSI; and whether one or both of the second resource set and the third resource set are used by the first node U01 for obtaining the interference measurement for calculating the first CSI depends on the first time domain resource.

As an embodiment, the first configuration information block indicates K1 resource sets, and the K1 is a positive integer greater than 1; and the second resource set and the third resource set are each one of the K1 resource sets, and the second information block is used by the first node U01 for determining the second resource set and the third resource set.

As an embodiment, the first configuration information block indicates K2 resource sets and K3 resource sets, the K2 and the K3 are each a positive integer, and at least one of the K2 or the K3 is greater than 1; the second resource set is one of the K2 resource sets, and the third resource set is one of the K3 resource sets; and the third information block is used by the first node U01 for determining at least one of the second resource set or the third resource set.

As an embodiment, the fourth information block is used for configuring the second resource set, and the fifth information block is used for configuring the third resource set.

As an embodiment, the steps in the dotted-line box F51 exist.

As an embodiment, the steps in the dotted-line box F52 exist.

As an embodiment, the steps in the dotted-line box F51 and the dotted-line box F52 cannot both exist.

As an embodiment, the steps in the dotted-line box F51 exist, and the steps in the dotted-line box F52 do not exist.

As an embodiment, the steps in the dotted-line box F51 do not exist, and the steps in the dotted-line box F52 exist.

As an embodiment, the steps in the dotted-line box F53 exist.

As an embodiment, the steps in the dotted-line box F53 do not exist.

As an embodiment, the steps in the dotted-line box F54 exist.

As an embodiment, the steps in the dotted-line box F54 do not exist.

As an embodiment, sending of the fourth information block is later than sending of the first information block.

As an embodiment, sending of the fourth information block is earlier than sending of the first information block.

As an embodiment, sending of the fourth information block is later than sending of the second information block.

As an embodiment, sending of the fourth information block is earlier than sending of the second information block.

As an embodiment, sending of the fourth information block is later than sending of the third information block.

As an embodiment, sending of the fourth information block is earlier than sending of the third information block.

As an embodiment, sending of the fourth information block is later than sending of the first configuration information block.

As an embodiment, sending of the fourth information block is earlier than sending of the first configuration information block.

As an embodiment, sending of the fifth information block is later than sending of the first information block.

As an embodiment, sending of the fifth information block is earlier than sending of the first information block.

As an embodiment, sending of the fifth information block is later than sending of the second information block.

As an embodiment, sending of the fifth information block is earlier than sending of the second information block.

As an embodiment, sending of the fifth information block is later than sending of the third information block.

As an embodiment, sending of the fifth information block is earlier than sending of the third information block.

As an embodiment, sending of the fifth information block is later than sending of the first configuration information block.

As an embodiment, sending of the fifth information block is earlier than sending of the first configuration information block.

As an embodiment, the above-mentioned method in a first node used for wireless communication includes:
receiving first signaling,
wherein the first signaling is used for triggering the first CSI.

As an embodiment, the first signaling includes DCI.

As an embodiment, the first signaling is one piece of DCI.

As an embodiment, the first signaling includes one or more DCI fields in one piece of DCI.

As an embodiment, a Cyclic Redundancy Check (CRC) of the first signaling is scrambled by a Cell (C)-Radio Network Temporary Identifier (RNTI).

As an embodiment, a CRC of the first signaling is scrambled by a Modulation and Coding Scheme (MCS)-C-RNTI.

As an embodiment, a CRC of the first signaling is scrambled by a Configured Scheduling (CS)-RNTI.

As an embodiment, the first signaling is DCI format 0_1 or DCI format 0_2.

As an embodiment, the first signaling includes a MAC CE.

As an embodiment, the first signaling is one MAC CE.

As an embodiment, the first configuration information block is used for configuring one CSI report, the first CSI includes CSI related to the one CSI report, and the first signaling indicates a trigger state of the one CSI report.

As an embodiment, the first signaling is DCI, and a DCI field CSI request of the first signaling triggers the first CSI.

As an embodiment, the first signaling is transmitted in a Physical Downlink Control Channel (PDCCH).

As an embodiment, the first information block is transmitted in a PDSCH.

As an embodiment, the first information block is transmitted in the PDCCH.

As an embodiment, the second information block is transmitted in a PDSCH.

As an embodiment, the third information block is transmitted in a PDSCH.

As an embodiment, the fourth information block is transmitted in a PDSCH.

As an embodiment, the fifth information block is transmitted in a PDSCH.

As an embodiment, the fourth information block and the fifth information block are transmitted in a same PDSCH.

As an embodiment, the fourth information block and the fifth information block are transmitted in different PDSCHs.

As an embodiment, the first configuration information block is transmitted in a PDSCH.

As an embodiment, the first CSI is transmitted in a PUSCH.

As an embodiment, the first CSI is transmitted in a PUCCH.

As an embodiment, a first transmission occasion set is used by the first node U01 for obtaining a channel measurement for calculating the first CSI, and any transmission occasion in the first transmission occasion set is a transmission occasion of one resource in the first resource set; and the first transmission occasion set depends on the first time domain resource.

### Embodiment 6

Embodiment 6 illustrates a schematic diagram of a first frequency domain resource according to an embodiment of the present application, as shown in FIG. 6.

In Embodiment 6, the first configuration information block is used for determining the first frequency domain resource; and RBs which at least one of the second resource set or the third resource set is across do not include all RBs in the first frequency domain resource.

As an embodiment, the benefits of the above-mentioned method include: more flexibly matching available frequency resources on symbols of different duplex types.

As an embodiment, the first configuration information block indicates the first frequency domain resource.

As an embodiment, the first configuration information block includes a first higher layer parameter, and the first higher layer parameter indicates the first frequency domain resource.

As an embodiment, a name of the first higher layer parameter includes "reportFreqConfiguration".

As an embodiment, the first higher layer parameter is "reportFreqConfiguration".

As an embodiment, a name of the first higher layer parameter includes "csi-ReportingBand".

As an embodiment, the first higher layer parameter is "csi-ReportingBand".

As an embodiment, the first frequency domain resource includes at least one subband.

As an embodiment, the first frequency domain resource includes at least one RB.

As an embodiment, the first frequency domain resource includes a plurality of subbands, and the plurality of subbands are consecutive in frequency domain.

As an embodiment, the first frequency domain resource includes a plurality of subbands, and the plurality of subbands are inconsecutive in frequency domain.

As an embodiment, one subband includes one or more RBs that are consecutive in frequency domain.

As an embodiment, except for subbands located at an edge of a BWP, other subbands in the first frequency domain resource include a same quantity of RBs.

As an embodiment, except for subbands located at an edge of a BWP, a quantity of RBs included in other subbands in the first frequency domain resource increases as a bandwidth of the BWP increases.

As an embodiment, except for subbands located at an edge of a BWP, a quantity of RBs included in any subband in the first frequency domain resource is P1, the P1 being a positive integer greater than 1.

As an embodiment, the P1 is a positive integer multiple of 4.

As an embodiment, the P1 is indicated by higher layer signaling.

As an embodiment, the P1 is related to a quantity of RBs included in the BWP.

As an embodiment, if the first frequency domain resource includes a starting subband in the BWP, a quantity of RBs included in the starting subband is P1-(Ns mod P1); or if the first frequency domain resource includes a last subband in the BWP, a quantity of RBs included in the last subband is (Ns+Nw) mod P1 or P1, Ns being an index of a starting PRB in the BWP, and Nw being a quantity of PRBs included in the BWP.

As an embodiment, a subcarrier spacing corresponding to one RB or one subband is fixed.

As an embodiment, a subcarrier spacing corresponding to one RB or one subband varies with a frequency range to which the first frequency domain resource belongs.

It should be noted that, unless specifically emphasized, a subband indicated by the first configuration information block and a "subband" in SBFD are mutually independent, and the latter is a relatively broad concept and is under discussion.

As an embodiment, a frequency domain resource which the first CSI is for belongs to the first frequency domain resource.

As an embodiment, a frequency domain resource to which the first CSI is related is the first frequency domain resource.

As an embodiment, the first CSI reflects channel quality on the first frequency domain resource.

As an embodiment, the first CSI includes CSI on each subband in the first frequency domain resource.

As an embodiment, the first CSI only includes CSI on part of subbands in the first frequency domain resource.

As an embodiment, a channel measurement and an interference measurement on the first frequency domain resource are used for calculating the first CSI.

As an embodiment, assuming that one Transport Block (TB) is sent on the first frequency domain resource, the first CSI indicates a modulation and coding scheme required for the one TB to obtain a Block Error Rate (BLER) not higher than a specific BLER.

As a sub-embodiment of the above-mentioned embodiment, the specific BLER is 0.1 or 0.00001.

As an embodiment, a frequency domain resource occupied by a CSI reference resource of the first CSI is the first frequency domain resource.

As an embodiment, the first configuration information block is used for configuring a CSI report quantity included in a CSI report related to the first frequency domain resource.

As an embodiment, the first configuration information block is used for configuring an RS resource set for channel measurement for generating a CSI report related to the first frequency domain resource.

As an embodiment, the first configuration information block is used for configuring a resource set for an interference measurement for generating a CSI report related to the first frequency domain resource.

As a sub-embodiment of the above-mentioned embodiment, the resource set includes a CSI-RS resource set or a CSI-IM resource set.

As an embodiment, the first configuration information block is used for configuring a time domain behavior of a CSI report related to the first frequency domain resource.

As an embodiment, the first configuration information block is used for configuring values of part or all of higher layer parameters "resourcesForChannelMeasurement", "csi-IM-ResourcesForInterference", "reportQuantity", "nzp-CSI-RS-ResourcesForInterference", "reportConfigType", "timeRestrictionForChannelMeasurements", "timeRestrictionForInterferenceMeasurements", "subbandSize" or "codebookConfig" for a CSI report related to the first frequency domain resource.

As an embodiment, RBs which at least one of the second resource set or the third resource set is across do not include all RBs in the first frequency domain resource.

As an embodiment, RBs which the second resource set is across do not include all RBs in the first frequency domain resource.

As an embodiment, RBs which the third resource set is across do not include all RBs in the first frequency domain resource.

As an embodiment, neither RBs which the second resource set is across nor RBs which the third resource set is across include all RBs in the first frequency domain resource.

As an embodiment, RBs which the first resource set is across include all RBs in the first frequency domain resource.

As an embodiment, RBs which the first resource set is across do not include all RBs in the first frequency domain resource.

As an embodiment, the RB in the present application includes a Physical Resource Block (PRB).

As an embodiment, the RB in the present application refers to a PRB.

As an embodiment, the RB in the present application includes 12 consecutive subcarriers in frequency domain.

As an embodiment, a density of one NZP CSI-RS resource is a frequency density of the CSI-RS resource.

As an embodiment, a density of one NZP CSI-RS resource is a quantity of Resource Elements (REs) occupied by the one NZP CSI-RS resource per RB per port.

### Embodiment 7

Embodiment 7 illustrates a schematic diagram of only one of a second resource set or a third resource set being used for an interference measurement according to an embodiment of the present application, as shown in FIG. 7.

In Embodiment 7, only one of the second resource set or the third resource set is used for obtaining an interference measurement for calculating the first CSI, and which one of the second resource set and the third resource set is used for obtaining the interference measurement for calculating the first CSI depends on the first time domain resource.

As an embodiment, the second resource set is used for obtaining an interference measurement for calculating the first CSI, or the third resource set is used for obtaining the interference measurement for calculating the first CSI.

As an embodiment, the first node obtains, based on only one of the second resource set or the third resource set, an interference measurement for calculating the first CSI.

As an embodiment, the first node obtains, based on only a part that is of one of the second resource set or the third resource set and that is not later than a CSI reference resource of the first CSI, an reference measurement for calculating the first CSI.

As an embodiment, the first node obtains, based on only a most recent occasion that is of one of the second resource set or the third resource set and that is not later than a CSI reference resource of the first CSI, an interference measurement for calculating the first CSI.

As an embodiment, the first node obtains an interference measurement for calculating the first CSI by measuring signals in all or part of resources in the second resource set.

As an embodiment, for any resource in the second resource set, the first node measures an RS only in part of RBs which the resource is across to obtain an interference measurement for calculating the first CSI.

As an embodiment, for any resource in the second resource set, the first node measures an RS in all RBs which the resource is across to obtain am interference measurement for calculating the first CSI.

As an embodiment, the first node obtains an interference measurement for calculating the first CSI by measuring signals in all or part of resources in the third resource set.

As an embodiment, for any resource in the third resource set, the first node measures an RS only in part of RBs which the resource is across to obtain an interference measurement for calculating the first CSI.

As an embodiment, for any resource in the third resource set, the first node measures an RS in all RBs which the resource is across to obtain am interference measurement for calculating the first CSI.

As an embodiment, which one of the second resource set and the third resource set is used for obtaining an interference measurement for calculating the first CSI depends on whether the first CSI and the first time domain resource overlap.

As an embodiment, whether the first CSI and the first time domain resource overlap refers to: whether a physical channel carrying the first CSI and the first time domain resource overlap.

As an embodiment, whether the first CSI and the first time domain resource overlap refers to: whether a time domain resource occupied by a physical channel carrying the first CSI and the first time domain resource overlap.

As an embodiment, the benefits of the above-mentioned method include: improving scheduling flexibility.

As an embodiment, the benefits of the above-mentioned method include: good forward compatibility.

As an embodiment, the benefits of the above-mentioned method include: simultaneously adapting to an aperiodic CSI report, a semi-persistent CSI report, and a periodic CSI report.

As an embodiment, when the first CSI and the first time domain resource are mutually orthogonal, the second resource set is used for obtaining an interference measurement for calculating the first CSI.

As an embodiment, when each symbol occupied by the first CSI does not belong to the first time domain resource, the second resource set is used for obtaining an interference measurement for calculating the first CSI.

As an embodiment, when at least one symbol occupied by the first CSI does not belong to the first time domain resource, the second resource set is used for obtaining an interference measurement for calculating the first CSI.

As an embodiment, when the first CSI and the first time domain resource overlap, the third resource set is used for obtaining an interference measurement for calculating the first CSI.

As an embodiment, when at least one symbol occupied by the first CSI belongs to the first time domain resource, the third resource set is used for obtaining an interference measurement for calculating the first CSI.

As an embodiment, when each symbol occupied by the first CSI belongs to the first time domain resource, the third resource set is used for obtaining an interference measurement for calculating the first CSI.

As an embodiment, when the first CSI and the first time domain resource are mutually orthogonal, the second resource set is used for obtaining an interference measurement for calculating the first CSI; or when the first CSI and the first time domain resource overlap, the third resource set is used for obtaining the interference measurement for calculating the first CSI.

As an embodiment, when at least one symbol occupied by the first CSI does not belong to the first time domain resource, the second resource set is used for obtaining an interference measurement for calculating the first CSI; or when each symbol occupied by the first CSI belongs to the first time domain resource, the third resource set is used for obtaining the interference measurement for calculating the first CSI.

As an embodiment, which one of the second resource set and the third resource set is used for obtaining an interference measurement for calculating the first CSI depends on whether the first signaling and the first time domain resource overlap.

As an embodiment, whether the first signaling and the first time domain resource overlap refers to: whether a physical channel carrying the first signaling and the first time domain resource overlap.

As an embodiment, whether the first signaling and the first time domain resource overlap refers to: whether a time domain resource occupied by a physical channel carrying the first signaling and the first time domain resource overlap.

As an embodiment, the benefits of the above-mentioned method include: simplifying design complexity, and making minimal changes to standards.

As an embodiment, the benefits of the above-mentioned method include: good forward compatibility.

As an embodiment, when the first signaling and the first time domain resource are mutually orthogonal, the second resource set is used for obtaining an interference measurement for calculating the first CSI.

As an embodiment, when each symbol occupied by the first signaling does not belong to the first time domain resource, the second resource set is used for obtaining an interference measurement for calculating the first CSI.

As an embodiment, when at least one symbol occupied by the first signaling does not belong to the first time domain resource, the second resource set is used for obtaining an interference measurement for calculating the first CSI.

As an embodiment, when the first signaling and the first time domain resource overlap, the third resource set is used for obtaining an interference measurement for calculating the first CSI.

As an embodiment, when at least one symbol occupied by the first signaling belongs to the first time domain resource, the third resource set is used for obtaining an interference measurement for calculating the first CSI.

As an embodiment, when each symbol occupied by the first signaling belongs to the first time domain resource, the third resource set is used for obtaining an interference measurement for calculating the first CSI.

As an embodiment, when the first signaling and the first time domain resource are mutually orthogonal, the second resource set is used for obtaining an interference measurement for calculating the first CSI; or when the first signaling and the first time domain resource overlap, the third resource set is used for obtaining the interference measurement for calculating the first CSI.

As an embodiment, when at least one symbol occupied by the first signaling does not belong to the first time domain resource, the second resource set is used for obtaining an interference measurement for calculating the first CSI; or when each symbol occupied by a CSI reference resource of the first CSI belongs to the first time domain resource, the third resource set is used for obtaining the interference measurement for calculating the first CSI.

As an embodiment, which one of the second resource set and the third resource set is used for obtaining an interference measurement for calculating the first CSI depends on whether a most recent transmission occasion that is of the first resource set and that is not later than a CSI reference resource of the first CSI and the first time domain resource overlap.

As an embodiment, the benefits of the above-mentioned method include: improving timeliness and accuracy of a CSI report.

As an embodiment, the benefits of the above-mentioned method include: good forward compatibility.

As an embodiment, the benefits of the above-mentioned method include: simultaneously adapting to aperiodic and semi-persistent.

As an embodiment, when a most recent transmission occasion that is of the first resource set and that is not later than a CSI reference resource of the first CSI and the first time domain resource are mutually orthogonal, the second resource set is used for obtaining an interference measurement for calculating the first CSI.

As an embodiment, when each symbol occupied by a most recent transmission occasion that is of the first resource set and that is not later than a CSI reference resource of the first CSI does not belong to the first time domain resource, the second resource set is used for obtaining an interference measurement for calculating the first CSI.

As an embodiment, when at least one symbol occupied by a most recent transmission occasion that is of the first resource set and that is not later than a CSI reference resource of the first CSI does not belong to the first time domain resource, the second resource set is used for obtaining an interference measurement for calculating the first CSI.

As an embodiment, when a most recent transmission occasion that is of the first resource set and that is not later than a CSI reference resource of the first CSI and the first time domain resource overlap, the third resource set is used for obtaining an interference measurement for calculating the first CSI.

As an embodiment, when at least one symbol occupied by a most recent transmission occasion that is of the first resource set and that is not later than a CSI reference resource of the first CSI belongs to the first time domain resource, the third resource set is used for obtaining an interference measurement for calculating the first CSI.

As an embodiment, when each symbol occupied by a most recent transmission occasion that is of the first resource set and that is not later than a CSI reference resource of the first CSI belongs to the first time domain resource, the third resource set is used for obtaining an interference measurement for calculating the first CSI.

As an embodiment, when a most recent transmission occasion that is of the first resource set and that is not later than a CSI reference resource of the first CSI and the first time domain resource are mutually orthogonal, the second resource set is used for obtaining an interference measurement for calculating the first CSI; or when the most recent transmission occasion that is of the first resource set and that is not later than the CSI reference resource of the first CSI and the first time domain resource overlap, the third resource set is used for obtaining the interference measurement for calculating the first CSI.

As an embodiment, when at least one symbol occupied by a most recent transmission occasion that is of the first resource set and that is not later than a CSI reference resource of the first CSI does not belong to the first time domain resource, the second resource set is used for obtaining an interference measurement for calculating the first CSI; or when each symbol occupied by the most recent transmission occasion that is of the first resource set and that is not later than the CSI reference resource of the first CSI belongs to the first time domain resource, the third resource set is used for obtaining the interference measurement for calculating the first CSI.

As an embodiment, when a most recent transmission occasion that is of each resource in the first resource set and that is not later than a CSI reference resource of the first CSI and the first time domain resource are mutually orthogonal, the second resource set is used for obtaining an interference measurement for calculating the first CSI; or when the most recent transmission occasion that is of each resource in the first resource set and that is not later than the CSI reference resource of the first CSI and the first time domain resource overlap, the third resource set is used for obtaining the interference measurement for calculating the first CSI.

As an embodiment, when a most recent transmission occasion that is of each resource in the first resource set and that is not later than a CSI reference resource of the first CSI occupies at least one symbol that does not belong to the first time domain resource, the second resource set is used for obtaining an interference measurement for calculating the first CSI; or when each symbol occupied by the most recent transmission occasion that is of each resource in the first resource set and that is not later than the CSI reference resource of the first CSI belongs to the first time domain resource, the third resource set is used for obtaining the interference measurement for calculating the first CSI.

As an embodiment, when a most recent transmission occasion among transmission occasions that are of all resources in the first resource set and that are not later than a CSI reference resource of the first CSI and the first time domain resource are mutually orthogonal, the second resource set is used for obtaining an interference measurement for calculating the first CSI; or when the most recent transmission occasion among the transmission occasions that are of all resources in the first resource set and that are not later than the CSI reference resource of the first CSI and the first time domain resource overlap, the third resource set is used for obtaining the interference measurement for calculating the first CSI.

As an embodiment, when a most recent transmission occasion among transmission occasions that are of all resources in the first resource set and that are not later than a CSI reference resource of the first CSI occupies at least one symbol that does not belong to the first time domain resource, the second resource set is used for obtaining an interference measurement for calculating the first CSI; or when each symbol occupied by the most recent transmission occasion among the transmission occasions that are of all resources in the first resource set and that are not later than the CSI reference resource of the first CSI belongs to the first time domain resource, the third resource set is used for obtaining the interference measurement for calculating the first CSI.

As an embodiment, which one of the second resource set and the third resource set is used for obtaining an interference measurement for calculating the first CSI depends on whether a CSI reference resource of the first CSI and the first time domain resource overlap.

As an embodiment, the benefits of the above-mentioned method include: making minimal changes to standards and having good backward compatibility.

As an embodiment, the benefits of the above-mentioned method include: simultaneously adapting to aperiodic and semi-persistent.

As an embodiment, when a CSI reference resource of the first CSI and the first time domain resource are mutually orthogonal, the second resource set is used for obtaining an interference measurement for calculating the first CSI.

As an embodiment, when each symbol occupied by a CSI reference resource of the first CSI does not belong to the first time domain resource, the second resource set is used for obtaining an interference measurement for calculating the first CSI.

As an embodiment, when at least one symbol occupied by a CSI reference resource of the first CSI does not belong to the first time domain resource, the second resource set is used for obtaining an interference measurement for calculating the first CSI.

As an embodiment, when a CSI reference resource of the first CSI and the first time domain resource overlap, the third resource set is used for obtaining an interference measurement for calculating the first CSI.

As an embodiment, when at least one symbol occupied by a CSI reference resource of the first CSI belongs to the first time domain resource, the third resource set is used for obtaining an interference measurement for calculating the first CSI.

As an embodiment, when each symbol occupied by a CSI reference resource of the first CSI belongs to the first time domain resource, the third resource set is used for obtaining an interference measurement for calculating the first CSI.

As an embodiment, when a CSI reference resource of the first CSI and the first time domain resource are mutually orthogonal, the second resource set is used for obtaining an interference measurement for calculating the first CSI; or when the CSI reference resource of the first CSI and the first time domain resource overlap, the third resource set is used for obtaining the interference measurement for calculating the first CSI.

As an embodiment, when at least one symbol occupied by a CSI reference resource of the first CSI does not belong to the first time domain resource, the second resource set is used for obtaining an interference measurement for calculating the first CSI; or when each symbol occupied by a CSI reference resource of the first CSI belongs to the first time domain resource, the third resource set is used for obtaining the interference measurement for calculating the first CSI.

As an embodiment, for definition of the CSI reference resource, refer to 3GPP TS38.214.

As an embodiment, the CSI reference resource includes one or more consecutive symbols in time domain.

As an embodiment, the CSI reference resource includes one slot in time domain.

As an embodiment, the CSI reference resource includes at least one subband in frequency domain.

As an embodiment, the CSI reference resource includes a group of downlink physical resource block.

As an embodiment, a frequency domain resource to which the first CSI relates is used for determining a frequency domain resource occupied by the CSI reference resource.

As an embodiment, the first configuration information block is used for determining the frequency domain resource to which the first CSI relates.

As an embodiment, the CSI reference resource of the first CSI is defined in frequency domain as a group of downlink RBs corresponding to a band to which the first CSI is related.

As an embodiment, the CSI reference resource of the first CSI is defined in time domain by a slot (n-first offset-second offset), and the first CSI occupies a slot n1; and the n1 is used for determining the n, and the first offset and the second offset are each an integer.

As a sub-embodiment of the above-mentioned embodiment, a downlink subcarrier spacing configuration and an uplink subcarrier spacing configuration are used for determining the n.

As a sub-embodiment of the above-mentioned embodiment, the n is equal to a product of the n1 and a first ratio rounded down plus a third offset; the third offset is an integer; and a downlink subcarrier spacing configuration and an uplink subcarrier spacing configuration are used for determining the first ratio.

As a reference embodiment of the above-mentioned sub-embodiment, a higher layer parameter "ca-SlotOffset" is used for determining the third offset.

As a reference embodiment of the above-mentioned sub-embodiment, the downlink subcarrier spacing configuration is used for determining the third offset.

As a sub-embodiment of the above-mentioned embodiment, the first offset is related to the downlink subcarrier spacing configuration.

As a sub-embodiment of the above-mentioned embodiment, a CSI report configured by the first configuration information block is aperiodic, and the first offset makes the CSI reference resource of the first CSI and a CSI request field corresponding to the first CSI be in a same valid downlink slot.

As a sub-embodiment of the above-mentioned embodiment, the first offset is a minimum value that is greater than or equal to a second threshold and that makes a slot (n-the first offset) correspond to a valid downlink slot; and the second threshold is an integer.

As a reference embodiment of the above-mentioned sub-embodiment, the second threshold is related to the downlink subcarrier spacing configuration.

As a reference embodiment of the above-mentioned sub-embodiment, the second threshold is related to a delay requirement.

As a sub-embodiment of the above-mentioned embodiment, a higher layer parameter "CellSpecificKoffset" is used for determining the second offset.

As a sub-embodiment of the above-mentioned embodiment, a Differential Koffset MAC CE command is used for determining the second offset.

As a sub-embodiment of the above-mentioned embodiment, a downlink subcarrier spacing configuration is used for determining the second offset.

As an embodiment, the downlink subcarrier spacing configuration is a subcarrier spacing configuration corresponding to the first resource set.

As an embodiment, the uplink subcarrier spacing configuration is a subcarrier spacing configuration corresponding to the first CSI.

As an embodiment, a slot is referred to as a valid downlink slot if the slot includes at least one DL or flexible symbol configured by higher layer signaling, and the slot does not fall within a measurement gap configured for the first node.

### Embodiment 8

Embodiment 8 illustrates a schematic diagram of a resource set for an interference measurement according to an embodiment of the present application, as shown in FIG. 8.

In Embodiment 8, only the second resource set among the second resource set and the third resource set is used for obtaining an interference measurement for calculating the first CSI, or both the second resource set and the third resource set are used for obtaining the interference measurement for calculating the first CSI; and whether one or both of the second resource set and the third resource set are used for obtaining the interference measurement for calculating the first CSI depends on the first time domain resource.

As an embodiment, whether one or both of the second resource set and the third resource set are used for obtaining the interference measurement for calculating the first CSI depends on the first time domain resource; and any resource in the third resource set is an SRS resource or an RSSI resource.

As an embodiment, the benefits of the above-mentioned method include: making full use of various interference measurement resources defined by existing standards to improve accuracy of an interference measurement, and reducing changes to the standards.

As an embodiment, the first node obtains, based on only the second resource set of the second resource set and the third resource set, an interference measurement for calculating the first CSI.

As an embodiment, the first node obtains, based on only a part that is of the second resource set of the second resource set and the third resource set and that is not later than a CSI reference resource of the first CSI, an interference measurement for calculating the first CSI.

As an embodiment, the first node obtains, based on only a most recent occasion that is of the second resource set of the second resource set and the third resource set and that is not later than a CSI reference resource of the first CSI, an interference measurement for calculating the first CSI.

As an embodiment, the first node obtains an interference measurement for calculating the first CSI by measuring signals in all or part of resources in the second resource set.

As an embodiment, for any resource in the second resource set, the first node measures an RS only in part of RBs which the resource is across to obtain an interference measurement for calculating the first CSI.

As an embodiment, for any resource in the second resource set, the first node measures an RS in all RBs which the resource is across to obtain am interference measurement for calculating the first CSI.

As an embodiment, the first node obtains, based on only the second resource set and the third resource set, an interference measurement for calculating the first CSI.

As an embodiment, the first node obtains, based on only a part that is of the second resource set and that is not later than a CSI reference resource of the first CSI and a part that is of the third resource set and that is not later than a CSI reference resource of the first CSI, an interference measurement for calculating the first CSI.

As an embodiment, the first node obtains, based on only a most recent occasion that is of the second resource set and that is not later than a CSI reference resource of the first CSI and a most recent occasion that is of the third resource set and that is not later than a CSI reference resource of the first CSI, an interference measurement for calculating the first CSI.

As an embodiment, the first node obtains an interference measurement for calculating the first CSI by measuring signals in all or part of resources in the second resource set and measuring signals in all or part of resources in the third resource set.

As an embodiment, for any resource in the second resource set and the third resource set, the first node measures an RS only in part of RBs which the resource is across to obtain an interference measurement for calculating the first CSI.

As an embodiment, for any resource in the second resource set and the third resource set, the first node measures an RS in all RBs which the resource is across to obtain am interference measurement for calculating the first CSI.

As an embodiment, one or both of the second resource set and the third resource set are used for obtaining an interference measurement for calculating the first CSI depends on whether the first CSI and the first time domain resource overlap.

As an embodiment, the benefits of the above-mentioned method include: improving scheduling flexibility.

As an embodiment, the benefits of the above-mentioned method include: good forward compatibility.

As an embodiment, the benefits of the above-mentioned method include: simultaneously adapting to an aperiodic CSI report, a semi-persistent CSI report, and a periodic CSI report.

As an embodiment, when the first CSI and the first time domain resource are mutually orthogonal, only the second resource set is used for obtaining an interference measurement for calculating the first CSI.

As an embodiment, when each symbol occupied by the first CSI does not belong to the first time domain resource, only the second resource set is used for obtaining an interference measurement for calculating the first CSI.

As an embodiment, when at least one symbol occupied by the first CSI does not belong to the first time domain resource, only the second resource set is used for obtaining an interference measurement for calculating the first CSI.

As an embodiment, when the first CSI and the first time domain resource overlap, the second resource set and the third resource set are both used for obtaining an interference measurement for calculating the first CSI.

As an embodiment, when at least one symbol occupied by the first CSI belongs to the first time domain resource, the second resource set and the third resource set are both used for obtaining an interference measurement for calculating the first CSI.

As an embodiment, when each symbol occupied by the first CSI belongs to the first time domain resource, the second resource set and the third resource set are both used for obtaining an interference measurement for calculating the first CSI.

As an embodiment, when the first CSI and the first time domain resource are mutually orthogonal, only the second resource set is used for obtaining an interference measurement for calculating the first CSI; or when the first CSI and the first time domain resource overlap, the second resource set and the third resource set are both used for obtaining the interference measurement for calculating the first CSI.

As an embodiment, when at least one symbol occupied by the first CSI does not belong to the first time domain resource, only the second resource set is used for obtaining an interference measurement for calculating the first CSI; or when each symbol occupied by the first CSI belongs to the first time domain resource, the second resource set and the third resource set are both used for obtaining the interference measurement for calculating the first CSI.

As an embodiment, whether one or both of the second resource set and the third resource set are used for obtaining an interference measurement for calculating the first CSI depends on whether the first signaling and the first time domain resource overlap.

As an embodiment, the benefits of the above-mentioned method include: simplifying design complexity, and making minimal changes to standards.

As an embodiment, the benefits of the above-mentioned method include: good forward compatibility.

As an embodiment, when the first signaling and the first time domain resource are mutually orthogonal, only the second resource set is used for obtaining an interference measurement for calculating the first CSI.

As an embodiment, when each symbol occupied by the first signaling does not belong to the first time domain resource, only the second resource set is used for obtaining an interference measurement for calculating the first CSI.

As an embodiment, when at least one symbol occupied by the first signaling does not belong to the first time domain resource, only the second resource set is used for obtaining an interference measurement for calculating the first CSI.

As an embodiment, when the first signaling and the first time domain resource overlap, the second resource set and the third resource set are both used for obtaining an interference measurement for calculating the first CSI.

As an embodiment, when at least one symbol occupied by the first signaling belongs to the first time domain resource, the second resource set and the third resource set are both used for obtaining an interference measurement for calculating the first CSI.

As an embodiment, when each symbol occupied by the first signaling belongs to the first time domain resource, the second resource set and the third resource set are both used for obtaining an interference measurement for calculating the first CSI.

As an embodiment, when the first signaling and the first time domain resource are mutually orthogonal, only the second resource set is used for obtaining an interference measurement for calculating the first CSI; or when the first signaling and the first time domain resource overlap, the second resource set and the third resource set are both used for obtaining the interference measurement for calculating the first CSI.

As an embodiment, when at least one symbol occupied by the first signaling does not belong to the first time domain resource, only the second resource set is used for obtaining an interference measurement for calculating the first CSI; or when each symbol occupied by a CSI reference resource of the first CSI belongs to the first time domain resource, the second resource set and the third resource set are both used for obtaining the interference measurement for calculating the first CSI.

As an embodiment, one or both of the second resource set and the third resource set are used for obtaining an interference measurement for calculating the first CSI depends on whether a most recent transmission occasion that is of the first resource set and that is not later than a CSI reference resource of the first CSI and the first time domain resource overlap.

As an embodiment, the benefits of the above-mentioned method include: improving timeliness and accuracy of a CSI report.

As an embodiment, the benefits of the above-mentioned method include: good forward compatibility.

As an embodiment, the benefits of the above-mentioned method include: simultaneously adapting to aperiodic and semi-persistent.

As an embodiment, when a most recent transmission occasion that is of the first resource set and that is not later than a CSI reference resource of the first CSI and the first time domain resource are mutually orthogonal, only the second resource set is used for obtaining an interference measurement for calculating the first CSI.

As an embodiment, when each symbol occupied by a most recent transmission occasion that is of the first resource set and that is not later than a CSI reference resource of the first CSI does not belong to the first time domain resource, only the second resource set is used for obtaining an interference measurement for calculating the first CSI.

As an embodiment, when at least one symbol occupied by a most recent transmission occasion that is of the first resource set and that is not later than a CSI reference resource of the first CSI does not belong to the first time domain resource, only the second resource set is used for obtaining an interference measurement for calculating the first CSI.

As an embodiment, when a most recent transmission occasion that is of the first resource set and that is not later than a CSI reference resource of the first CSI and the first time domain resource overlap, the second resource set and the third resource set are both used for obtaining an interference measurement for calculating the first CSI.

As an embodiment, when at least one symbol occupied by a most recent transmission occasion that is of the first resource set and that is not later than a CSI reference resource of the first CSI belongs to the first time domain resource, the second resource set and the third resource set are both used for obtaining an interference measurement for calculating the first CSI.

As an embodiment, when each symbol occupied by a most recent transmission occasion that is of the first resource set and that is not later than a CSI reference resource of the first CSI belongs to the first time domain resource, the second resource set and the third resource set are both used for obtaining an interference measurement for calculating the first CSI.

As an embodiment, when a most recent transmission occasion that is of the first resource set and that is not later than a CSI reference resource of the first CSI and the first time domain resource are mutually orthogonal, only the second resource set is used for obtaining an interference measurement for calculating the first CSI; or when the most recent transmission occasion that is of the first resource set and that is not later than the CSI reference resource of the first CSI and the first time domain resource overlap, the second resource set and the third resource set are both used for obtaining the interference measurement for calculating the first CSI.

As an embodiment, when at least one symbol occupied by a most recent transmission occasion that is of the first resource set and that is not later than a CSI reference resource of the first CSI does not belong to the first time domain resource, only the second resource set is used for obtaining an interference measurement for calculating the first CSI; or when each symbol occupied by the most recent transmission occasion that is of the first resource set and that is not later than the CSI reference resource of the first CSI belongs to the first time domain resource, the second resource set and the third resource set are both used for obtaining the interference measurement for calculating the first CSI.

As an embodiment, when a most recent transmission occasion that is of each resource in the first resource set and that is not later than a CSI reference resource of the first CSI and the first time domain resource are mutually orthogonal, only the second resource set is used for obtaining an interference measurement for calculating the first CSI; or when the most recent transmission occasion that is of each resource in the first resource set and that is not later than the CSI reference resource of the first CSI and the first time domain resource overlap, the second resource set and the third resource set are both used for obtaining the interference measurement for calculating the first CSI.

As an embodiment, when a most recent transmission occasion that is of each resource in the first resource set and that is not later than a CSI reference resource of the first CSI occupies at least one symbol that does not belong to the first time domain resource, only the second resource set is used for obtaining an interference measurement for calculating the first CSI; or when each symbol occupied by the most recent transmission occasion that is of each resource in the first resource set and that is not later than the CSI reference resource of the first CSI belongs to the first time domain resource, the second resource set and the third resource set are both used for obtaining the interference measurement for calculating the first CSI.

As an embodiment, when a most recent transmission occasion among transmission occasions that are of all resources in the first resource set and that are not later than a CSI reference resource of the first CSI and the first time domain resource are mutually orthogonal, only the second resource set is used for obtaining an interference measurement for calculating the first CSI; or when the most recent transmission occasion among the transmission occasions that are of all resources in the first resource set and that are not later than the CSI reference resource of the first CSI and the first time domain resource overlap, the second resource set and the third resource set are both used for obtaining the interference measurement for calculating the first CSI.

As an embodiment, when a most recent transmission occasion among transmission occasions that are of all resources in the first resource set and that are not later than a CSI reference resource of the first CSI occupies at least one symbol that does not belong to the first time domain resource, only the second resource set is used for obtaining an interference measurement for calculating the first CSI; or when each symbol occupied by the most recent transmission occasion among the transmission occasions that are of all resources in the first resource set and that are not later than the CSI reference resource of the first CSI belongs to the first time domain resource, the second resource set and the third resource set are both used for obtaining the interference measurements for calculating the first CSI.

As an embodiment, one or both of the second resource set and the third resource set are used for obtaining an interference measurement for calculating the first CSI depends on whether the CSI reference resource of the first CSI and the first time domain resource overlap.

As an embodiment, the benefits of the above-mentioned method include: making minimal changes to standards and having good backward compatibility.

As an embodiment, the benefits of the above-mentioned method include: simultaneously adapting to aperiodic and semi-persistent.

As an embodiment, when a CSI reference resource of the first CSI and the first time domain resource are mutually orthogonal, only the second resource set is used for obtaining an interference measurement for calculating the first CSI.

As an embodiment, when each symbol occupied by a CSI reference resource of the first CSI does not belong to the first time domain resource, only the second resource set is used for obtaining an interference measurement for calculating the first CSI.

As an embodiment, when at least one symbol occupied by a CSI reference resource of the first CSI does not belong to the first time domain resource, only the second resource set is used for obtaining an interference measurement for calculating the first CSI.

As an embodiment, when a CSI reference resource of the first CSI and the first time domain resource overlap, the second resource set and the third resource set are both used for obtaining an interference measurement for calculating the first CSI.

As an embodiment, when at least one symbol occupied by a CSI reference resource of the first CSI belongs to the first time domain resource, the second resource set and the third resource set are both used for obtaining an interference measurement for calculating the first CSI.

As an embodiment, when each symbol occupied by a CSI reference resource of the first CSI belongs to the first time domain resource, the second resource set and the third resource set are both used for obtaining the interference measurement for calculating the first CSI.

As an embodiment, when a CSI reference resource of the first CSI and the first time domain resource are mutually orthogonal, only the second resource set is used for obtaining an interference measurement for calculating the first CSI; or when the CSI reference resource of the first CSI and the first time domain resource overlap, the second resource set and the third resource set are both used for obtaining the interference measurement for calculating the first CSI.

As an embodiment, when at least one symbol occupied by a CSI reference resource of the first CSI does not belong to the first time domain resource, only the second resource set is used for obtaining an interference measurement for calculating the first CSI; or when each symbol occupied by a CSI reference resource of the first CSI belongs to the first time domain resource, the second resource set and the third resource set are both used for obtaining the interference measurement for calculating the first CSI.

As an embodiment, the essence of the above-mentioned method includes: employing additional resources on symbols within the first time domain resource to perform and interference measurement; and better adapting to interference measurement requirements of the symbols within the first time domain resource, and improving measurement accuracy.

### Embodiment 9

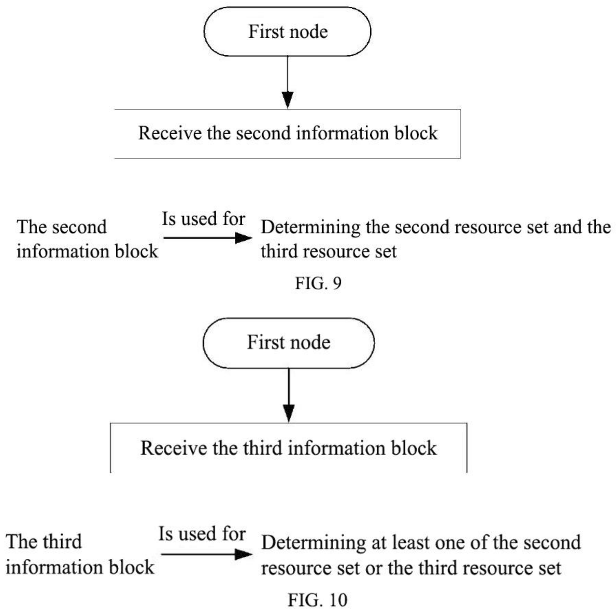

Embodiment 9 illustrates a schematic diagram of a second information block according to an embodiment of the present application, as shown in FIG. 9.

In Embodiment 9, the first node receives the second information block, wherein the first configuration information block indicates K1 resource sets, and the K1 is a positive integer greater than 1; and the second resource set and the third resource set are each one of the K1 resource sets, and the second information block is used for determining the second resource set and the third resource set.

As an embodiment, the second information block is carried by higher layer signaling.

As an embodiment, the second information block is carried by RRC signaling.

As an embodiment, the second information block includes information in all or part of fields in at least one RRC IE.

As an embodiment, the second information block includes information in all or part of fields in a CSI-AperiodicTriggerStateList IE.

As an embodiment, the second information block includes information in all or part of fields in a ServingCellConfig IE.

As an embodiment, the second information block includes information in all or part of fields in a ServingCellConfigCommonSIB IE.

As an embodiment, the second information block includes information in all or part of fields in a ServingCellConfigCommon IE.

As an embodiment, the second information block includes information in all or part of fields in a CSI-MeasConfig IE.

As an embodiment, the second information block is carried by at least one RRC IE.

As an embodiment, the second information block is carried by a CSI-AperiodicTriggerStateList IE.

As an embodiment, the second information block is a CSI-AperiodicTriggerStateList IE.

As an embodiment, the second information block is carried by a ServingCellConfig IE.

As an embodiment, the second information block is carried by a CSI-MeasConfig IE.

As an embodiment, the second information block includes a MAC CE.

As an embodiment, the second information block includes DCI.

As an embodiment, the second information block and the first configuration information block are carried by a same IE.

As an embodiment, the second information block and the first configuration information block are carried by a same ServingCellConfig IE.

As an embodiment, the second information block and the first configuration information block are carried by a same CSI-MeasConfig IE.

As an embodiment, the second information block and the first configuration information block are carried by different fields of a same CSI-MeasConfig IE.

As an embodiment, the first configuration information block sequentially indicates the K1 resource sets.

As an embodiment, the first configuration information block indicates a second information sub-block, and the second information sub-block indicates the K1 first resource sets; and the second information sub-block is carried by at least one RRC IE.

As an embodiment, the second information sub-block is carried by a CSI-ResourceConfig IE.

As an embodiment, the second information sub-block is a CSI-ResourceConfig IE.

As an embodiment, the second information sub-block is a CSI-ResourceConfig IE, and the first configuration information block indicates CSI-ResourceConfigId of the CSI-ResourceConfig IE.

As an embodiment, the second information sub-block sequentially indicates the K1 resource sets.

As an embodiment, the second information sub-block sequentially indicates IDs of the K1 resource sets.

As an embodiment, an ID of any resource set in the K1 resource sets is NZP-CSI-RS-ResourceSetId or CSI-IM-ResourceSetId.

As an embodiment, a csi-IM-ResourcesForInterference field or an nzp-CSI-RS-ResourcesForInterference field of the first configuration information block indicates the second information sub-block.

As an embodiment, the second information block indicates the second resource set and the third resource set.

As an embodiment, the second information block first indicates the second resource set, and then indicates the third resource set.

As an embodiment, the second information block indicates the second resource set and the third resource set from the K1 resource sets.

As an embodiment, the second information block includes a first bit block and a second bit block, the first bit block indicates the second resource set from the K1 resource sets, and the second bit block indicates the third resource set from the K1 resource sets.

As an embodiment, the first bit block and the second bit block each include part or all bits in at least one field of the second information block.

As an embodiment, the first bit block and the second bit block each include different bits in a same field of the second information block.

As a sub-embodiment of the above-mentioned embodiment, the same field is a csi-IM-ResourcesForlnterference field or an nzp-CSI-RS-ResourcesForInterference field.

As a sub-embodiment of the above-mentioned embodiment, the first bit block is first N1 bits of a same field, and the second bit block is last N2 bits of the same field; and the N1 and the N2 are each a positive integer, and a sum of the N1 and the N2 is not greater than a quantity of bits included in the same field.

As an embodiment, the first bit block and the second bit block each include different bits in different fields of the second information block.

As an embodiment, the first bit block is located before the second bit block in the second information block.

As an embodiment, a benefit of the above-mentioned method is that a sender of the first configuration information block and the first node do not have misunderstanding on which resource set the second resource set and the third resource set are each.

As an embodiment, a value of the first bit block is equal to i1, and the second resource set is an i1^{th} resource set among the K1 resource sets; and a value of the second bit block is equal to i2, and the third resource set is an i2^{th} resource set among the K1 resource sets.

As an embodiment, the second information block is transmitted on a PDSCH.

### Embodiment 10

Embodiment 10 illustrates a schematic diagram of a third information block according to an embodiment of the present application, as shown in FIG. 10.

In Embodiment 10, the first node receives the third information block, wherein the first configuration information block indicates K2 resource sets and K3 resource sets, the K2 and the K3 are each a positive integer, and at least one of the K2 or the K3 is greater than 1; the second resource set is one of the K2 resource sets, and the third resource set is one of the K3 resource sets; and the third information block is used for determining at least one of the second resource set or the third resource set.

As an embodiment, the third information block is carried by higher layer signaling.

As an embodiment, the third information block is carried by RRC signaling.

As an embodiment, the third information block includes information in all or part of fields in at least one RRC IE.

As an embodiment, the third information block includes information in all or part of fields in a CSI-AperiodicTriggerStateList IE.

As an embodiment, the third information block includes information in all or part of fields in a ServingCellConfig IE.

As an embodiment, the third information block includes information in all or part of fields in a ServingCellConfigCommonSIB IE.

As an embodiment, the third information block includes information in all or part of fields in a ServingCellConfigCommon IE.

As an embodiment, the third information block includes information in all or part of fields in a CSI-MeasConfig IE.

As an embodiment, the third information block is carried by at least one RRC IE.

As an embodiment, the third information block is carried by a CSI-AperiodicTriggerStateList IE.

As an embodiment, the third information block is a CSI-AperiodicTriggerStateList IE.

As an embodiment, the third information block is carried by a ServingCellConfig IE.

As an embodiment, the third information block is carried by a CSI-MeasConfig IE.

As an embodiment, the third information block includes a MAC CE.

As an embodiment, the third information block includes DCI.

As an embodiment, the third information block and the first configuration information block are carried by a same IE.

As an embodiment, the third information block and the first configuration information block are carried by a same ServingCellConfig IE.

As an embodiment, the third information block and the first configuration information block are carried by a same CSI-MeasConfig IE.

As an embodiment, the third information block and the first configuration information block are carried by different fields of a same CSI-MeasConfig IE.

As an embodiment, the K2 is greater than 1, and the first configuration information block sequentially indicates the K2 resource sets.

As an embodiment, the K3 is greater than 1, and the first configuration information block sequentially indicates the K3 resource sets.

As an embodiment, the first configuration information block first indicates the K2 resource sets, and then indicates the K3 resource sets.

As an embodiment, a benefit of the above-mentioned method is that a sender of the first configuration information block and the first node do not have misunderstanding on the K2 resource sets and the K3 resource sets.

As an embodiment, the first configuration information block indicates a third information sub-block, and the third information sub-block indicates the K2 first resource sets.

As an embodiment, the first configuration information block indicates a fourth information sub-block, and the fourth information sub-block indicates the K3 first resource sets.

As an embodiment, the third information sub-block is carried by at least one RRC IE.

As an embodiment, the third information sub-block is a CSI-ResourceConfig IE.

As an embodiment, the fourth information sub-block is carried by at least one RRC IE.

As an embodiment, the fourth information sub-block is a CSI-ResourceConfig IE.

As an embodiment, the third information sub-block is a CSI-ResourceConfig IE, and the first configuration information block indicates CSI-ResourceConfigId of the CSI-ResourceConfig IE.

As an embodiment, the fourth information sub-block is a CSI-ResourceConfig IE, and the first configuration information block indicates CSI-ResourceConfigId of the CSI-ResourceConfig IE.

As an embodiment, the third information sub-block and the fourth information sub-block are each carried by a CSI-ResourceConfig IE.

As an embodiment, the fourth information sub-block is carried by a MeasObjectCLI IE.

As an embodiment, for the specific definition of the MeasObjectCLI IE, refer to Section 6.3.2 of 3GPP TS 38.331.

As an embodiment, the K2 is greater than 1, and the third configuration information sub-block sequentially indicates the K2 resource sets.

As an embodiment, the K2 is greater than 1, and the third information sub-block sequentially indicates IDs of the K2 resource sets,

As an embodiment, the K3 is greater than 1, and the fourth information sub-block sequentially indicates the K3 resource sets.

As an embodiment, the K3 is greater than 1, and the fourth information sub-block sequentially indicates IDs of the K3 resource sets.

As an embodiment, an ID of any resource set in the K2 resource sets is NZP-CSI-RS-ResourceSetId or CSI-IM-ResourceSetId.

As an embodiment, an ID of any resource set in the K3 resource sets is NZP-CSI-RS-ResourceSetId or CSI-IM-ResourceSetId.

As an embodiment, the K3 is equal to 1, and the fourth information sub-block sequentially indicates each resource in the third resource set.

As an embodiment, the K3 is equal to 1, and the fourth information sub-block sequentially indicates an ID of each resource in the third resource set.

As an embodiment, an ID of any resource in the third resource set is one SRS-ResourceId or RSSI-ResourceId.

As an embodiment, the first configuration information block includes a third bit block and a fourth bit block, and the third bit block and the fourth bit block respectively indicate the third information sub-block and the fourth information sub-block.

As an embodiment, the third bit block includes all or part of bits in a first field of the first configuration information block, and the fourth bit block includes all or part of bits in a second field of the first configuration information block.

As an embodiment, a name of the first field includes "ResourcesForInterference".

As an embodiment, a name of the second field includes "ResourcesForInterference".

As an embodiment, names of both the first field and the second field include "ResourcesForInterference".

As an embodiment, the third bit block includes part of bits in a third field of the first configuration information block, and the fourth bit block includes the other bits in the third field of the first configuration information block.

As an embodiment, a name of the third field includes "ResourcesForInterference".

As an embodiment, the third bit block is located before the fourth bit block in the first configuration information block.

As an embodiment, a benefit of the above-mentioned method is that a sender of the first configuration information block and the first node do not have misunderstanding on the K2 resource sets and the K3 resource sets.

As an embodiment, the third information block indicates the second resource set and the third resource set.

As an embodiment, the third information block first indicates the second resource set, and then indicates the third resource set.

As an embodiment, the K2 is greater than 1, the K3 is equal to 1, and the third information block is used for determining the second resource set.

As an embodiment, the K2 is greater than 1, the K3 is equal to 1, the third information block indicates the second resource set from the K2 resource sets, and the third resource set is the K3 resource sets.

As an embodiment, the K2 is greater than 1, the K3 is greater than 1, and the third information block is used for determining the third resource set.

As an embodiment, the K2 is equal to 1, the K3 is greater than 1, the third information block indicates the third resource set from the K3 resource sets, and the second resource set is the K2 resource sets.

As an embodiment, the K2 is greater than 1, the K3 is greater than 1, and the third information block is used for determining the second resource set and the third resource set.

As an embodiment, the K2 is greater than 1, the K3 is greater than 1, and the third information block indicates the second resource set from the K2 resource sets, and indicates the third resource set from the K3 resource sets.

As an embodiment, the third information block includes a fifth bit block, the fifth bit block indicates the second resource set from the K2 resource sets, and the fifth bit block includes all or part of bits in at least one field of the third information block.

As an embodiment, a value of the fifth bit block is equal to i3, and the second resource set is an i3^{th} resource set among the K2 resource sets.

As an embodiment, the third information block includes a sixth bit block, the sixth bit block indicates the third resource set from the K3 resource sets, and the sixth bit block includes all or part of bits in at least one field of the third information block.

As an embodiment, a value of the sixth bit block is equal to i4, and the third resource set is an i4^{th} resource set among the K3 resource sets.

As an embodiment, the fifth bit block includes all or part of bits in a fourth field of the third information block.

As an embodiment, the sixth bit block includes all or part of bits in a fourth field of the third information block.

As an embodiment, a name of the fourth field includes "ResourcesForInterference".

As an embodiment, the fifth bit block and the sixth bit block each include different bits in a same field of the third information block.

As a sub-embodiment of the above-mentioned embodiment, a name of the same field includes "ResourcesForInterference".

As a sub-embodiment of the above-mentioned embodiment, the fifth bit block is first M1 bits of the same field, and the sixth bit block is last M2 bits of the same field; and the M1 and the M2 are each a positive integer, and a sum of the M1 and the M2 is not greater than a quantity of bits included in the same field.

As an embodiment, the fifth bit block and the sixth bit block each include bits in different fields of the third information block.

As an embodiment, the fifth bit block is located before the sixth bit block in the third information block.

As an embodiment, a benefit of the above-mentioned method is that a sender of the first configuration information block and the first node do not have misunderstanding on which resource set the second resource set and the third resource set are each.

As an embodiment, the third information block is transmitted on a PDSCH.

### Embodiment 11

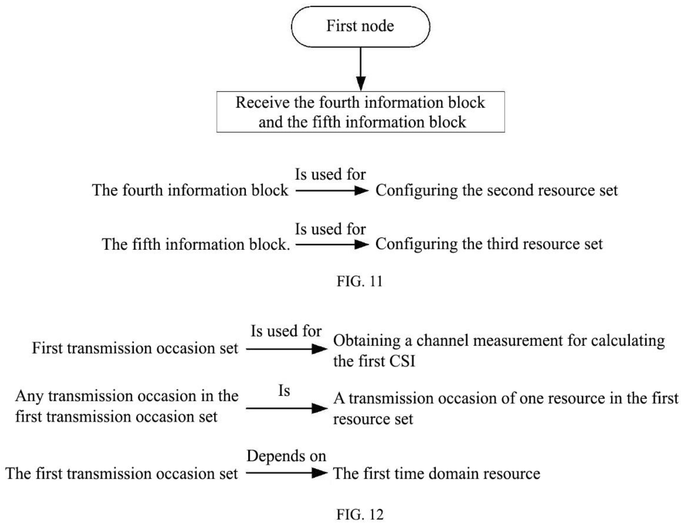

Embodiment 11 illustrates a schematic diagram of a fourth information block and a fifth information block according to an embodiment of the present application, as shown in FIG. 11.

In Embodiment 11, the first node receives the fourth information block and the fifth information block, wherein the fourth information block is used for configuring the second resource set, and the fifth information block is used for configuring the third resource set.

As an embodiment, the fourth information block indicates configuration information of the second resource set.

As an embodiment, the fourth information block is used for configuring each resource of the second resource set.

As an embodiment, the fourth information block indicates configuration information of each resource of the second resource set.

As an embodiment, the fifth information block indicates configuration information of the third resource set.

As an embodiment, the fifth information block is used for configuring each resource of the third resource set.

As an embodiment, the fifth information block indicates configuration information of each resource of the third resource set.

As an embodiment, configuration information of the second resource set or the third resource set includes: one or more of an ID of each included resource, repetition information, a trigger offset, Tracking Reference Signal (TRS) information, or grouping and pairing information.

As an embodiment, configuration information of any resource in the second resource set or the third resource set includes: one or more of a time domain resource, a frequency domain resource, a quantity of ports, a cdm type, density, a power control offset, a Transmission Configuration Indicator (TCI) status, a scrambling ID, a periodicity and an offset, or an RE pattern.

As an embodiment, the fourth information block is carried by higher layer signaling.

As an embodiment, the fourth information block is carried by RRC signaling.

As an embodiment, the fourth information block includes information in all or part of fields in one RRC IE.

As an embodiment, the fourth information block includes information in all or part of fields in a CSI-IM-ResourceSet IE.

As an embodiment, the fourth information block includes information in all or part of fields in an NZP-CSI-RS-ResourceSet IE.

As an embodiment, the fourth information block is carried by a CSI-IM-ResourceSet IE or an NZP-CSI-RS-ResourceSet IE.

As an embodiment, the fourth information block includes information in all or part of fields in at least one CSI-IM-Resource IE.

As an embodiment, the fourth information block includes information in all or part of fields in at least one NZP-CSI-RS-Resource IE.

As an embodiment, the fourth information block includes a MAC CE.

As an embodiment, the fifth information block is carried by higher layer signaling.

As an embodiment, the fifth information block is carried by RRC signaling.

As an embodiment, the fifth information block includes information in all or part of fields in an RRC IE.

As an embodiment, the fifth information block includes information in all or part of fields in a CSI-IM-ResourceSet IE.

As an embodiment, the fifth information block includes information in all or part of fields in an NZP-CSI-RS-ResourceSet IE.

As an embodiment, the fifth information block is carried by a CSI-IM-ResourceSet IE or an NZP-CSI-RS-ResourceSet IE.

As an embodiment, the fifth information block includes information in all or part of fields in at least one CSI-IM-Resource IE.

As an embodiment, the fifth information block includes information in all or part of fields in at least one NZP-CSI-RS-Resource IE.

As an embodiment, the fifth information block is carried by a MeasConfig IE.

As an embodiment, the fifth information block is carried by a MeasObjectToAddModList IE.

As an embodiment, the fifth information block is carried by a MeasObjectCLI IE.

As an embodiment, the fifth information block is carried by an RRCReconfiguration message.

As an embodiment, the fifth information block includes a MAC CE.

As an embodiment, for the CSI-IM-ResourceSet IE, the NZP-CSI-RS-ResourceSet IE, the CSI-IM-Resource IE, the NZP-CSI-RS-Resource IE, the MeasConfig IE, the MeasObjectToAddModList IE, the MeasObjectCLI IE, and the RRCReconfiguration message, specifically refer to 3GPP TS 38.331.

As an embodiment, the fourth information block and the fifth information block each include information in different CSI-IM-ResourceSet IEs.

As an embodiment, the fourth information block and the fifth information block each include information in different NZP-CSI-RS-ResourceSet IEs.

As an embodiment, the fourth information block and the fifth information block each include information in different (one or more) CSI-IM-Resource IEs or NZP-CSI-RS-Resource IEs.

As an embodiment, one of the fourth information block and the fifth information block includes information in a CSI-IM-ResourceSet IE, and the other includes information in an NZP-CSI-RS-ResourceSet IE.

As an embodiment, one of the fourth information block and the fifth information block includes information in at least one CSI-IM-Resource IE, and the other includes information in at least one NZP-CSI-RS-Resource IE.

As an embodiment, the fourth information block includes information in a CSI-IM-ResourceSet IE or an NZP-CSI-RS-ResourceSet IE, and the fifth information block includes all or part of information in a MeasObjectCLI IE.

As an embodiment, the fourth information block includes information in at least one CSI-IM-Resource IE or at least one NZP-CSI-RS-Resource IE, and the fifth information block includes information in at least one SRS-Resource or at least one RSSI-ResourceConfigCLI.

As an embodiment, the fourth information block and the first configuration information block are carried by a same IE.

As an embodiment, the fourth information block and the first configuration information block are carried by a same ServingCellConfig IE.

As an embodiment, the fourth information block and the first configuration information block are carried by a same CSI-MeasConfig IE.

As an embodiment, the fifth information block and the first configuration information block are carried by a same IE.

As an embodiment, the fifth information block and the first configuration information block are carried by a same ServingCellConfig IE.

As an embodiment, the fifth information block and the first configuration information block are carried by a same CSI-MeasConfig IE.

As an embodiment, the fifth information block and the first configuration information block are carried by different IEs.

As an embodiment, the fifth information block and the first configuration information block are carried by different RRC messages.

As an embodiment, the fifth information block and the first configuration information block are carried by different fields of a same RRC.

As an embodiment, the fourth information block and the fifth information block are each transmitted on a PDSCH.

As an embodiment, the fourth information block and the fifth information block are transmitted on a same PDSCH.

As an embodiment, the fourth information block and the fifth information block are transmitted on different PDSCHs.

As an embodiment, the first configuration information block indicates K4 resource sets, and the K4 is a positive integer greater than 1; and the second resource set is one of the K4 resource sets, and a sixth information block is used for determining the second resource set from the K4 resource sets.

As an embodiment, the first configuration information block sequentially indicates the K4 resource sets.

As an embodiment, the first configuration information block indicates one CSI-ResourceConfig IE, and the one CSI-ResourceConfig IE sequentially indicates the K4 resource sets.

As an embodiment, a csi-IM-ResourcesForInterference field or a nzp-CSI-RS-ResourcesForInterference field of the first configuration information block indicates the K4 resource sets.

As an embodiment, the sixth information block includes information in all or part of fields in at least one RRC IE.

As an embodiment, the sixth information block is carried by a CSI-AperiodicTriggerStateList IE.

As an embodiment, the sixth information block is a CSI-AperiodicTriggerStateList IE.

As an embodiment, the sixth information block indicates the second resource set from the K4 resource sets.

### Embodiment 12

Embodiment 12 illustrates a schematic diagram of a first transmission occasion set according to an embodiment of the present application, as shown in FIG. 12.

In Embodiment 12, the first transmission occasion set is used for obtaining a channel measurement for calculating the first CSI, and any transmission occasion in the first transmission occasion set is a transmission occasion of one resource in the first resource set; and the first transmission occasion set depends on the first time domain resource.

As an embodiment, the first node obtains a channel measurement for calculating the first CSI based only on the first transmission occasion set of the first resource set.

As an embodiment, any transmission occasion in the first transmission occasion set is not later than a CSI reference resource of the first CSI.

As an embodiment, the first transmission occasion set depends on whether the first CSI and the first time domain resource overlap.

As an embodiment, when the first CSI and the first time domain resource are mutually orthogonal, the first transmission occasion set only includes a transmission occasion mutually orthogonal with the first time domain resource.

As an embodiment, when the first CSI and the first time domain resource are mutually orthogonal, the first transmission occasion set only includes a transmission occasion occupying at least one symbol that does not belong to the first time domain resource.

As an embodiment, when the first CSI and the first time domain resource overlap, the first transmission occasion set only includes a transmission occasion belonging to the first time domain resource.

As an embodiment, when the first CSI and the first time domain resource overlap, the first transmission occasion set only includes a transmission occasion overlapping with the first time domain resource.

As an embodiment, when the first CSI occupies at least one symbol that does not belong to the first time domain resource, the first transmission occasion set only includes a transmission occasion mutually orthogonal with the first time domain resource.

As an embodiment, when the first CSI occupies at least one symbol that does not belong to the first time domain resource, the first transmission occasion set only includes a transmission occasion occupying at least one symbol that does not belong to the first time domain resource.

As an embodiment, when a time domain resource occupied by the first CSI belongs to the first time domain resource, the first transmission occasion set only includes a transmission occasion belonging to the first time domain resource.

As an embodiment, when a time domain resource occupied by the first CSI belongs to the first time domain resource, the first transmission occasion set only includes a transmission occasion overlapping with the first time domain resource.

As an embodiment, the first transmission occasion set depends on whether the first signaling and the first time domain resource overlap.

As an embodiment, when the first signaling and the first time domain resource are mutually orthogonal, the first transmission occasion set only includes a transmission occasion mutually orthogonal with the first time domain resource.

As an embodiment, when the first signaling and the first time domain resource are mutually orthogonal, the first transmission occasion set only includes a transmission occasion occupying at least one symbol that does not belong to the first time domain resource.

As an embodiment, when the first signaling and the first time domain resource overlap, the first transmission occasion set only includes a transmission occasion belonging to the first time domain resource.

As an embodiment, when the first signaling and the first time domain resource overlap, the first transmission occasion set only includes a transmission occasion overlapping with the first time domain resource.

As an embodiment, when the first signaling occupies at least one symbol that does not belong to the first time domain resource, the first transmission occasion set only includes a transmission occasion mutually orthogonal with the first time domain resource.

As an embodiment, when the first signaling occupies at least one symbol that does not belong to the first time domain resource, the first transmission occasion set only includes a transmission occasion occupying at least one symbol that does not belong to the first time domain resource.

As an embodiment, when a time domain resource occupied by the first signaling belongs to the first time domain resource, the first transmission occasion set only includes a transmission occasion belonging to the first time domain resource.

As an embodiment, when a time domain resource occupied by the first signaling belongs to the first time domain resource, the first transmission occasion set only includes a transmission occasion overlapping with the first time domain resource.

As an embodiment, the first transmission occasion set depends on whether a most recent transmission occasion that is of the first resource set and that is not later than a CSI reference resource of the first CSI and the first time domain resource overlap.

As an embodiment, when the most recent transmission occasion that is of the first resource set and that is not later than the CSI reference resource of the first CSI and the first time domain resource are mutually orthogonal, the first transmission occasion set only includes a transmission occasion mutually orthogonal with the first time domain resource.

As an embodiment, when the most recent transmission occasion that is of the first resource set and that is not later than the CSI reference resource of the first CSI and the first time domain resource are mutually orthogonal, the first transmission occasion set only includes a transmission occasion occupying at least one symbol that does not belong to the first time domain resource.

As an embodiment, when a most recent transmission occasion that is of each resource in the first resource set and that is not later than a CSI reference resource of the first CSI and the first time domain resource are mutually orthogonal, the first transmission occasion set only includes a transmission occasion mutually orthogonal with the first time domain resource, or the first transmission occasion set only includes a transmission occasion occupying at least one symbol that does not belong to the first time domain resource.

As an embodiment, when a most recent transmission occasion among transmission occasions that are of all resources in the first resource set and that are not later than a CSI reference resource of the first CSI and the first time domain resource are mutually orthogonal, the first transmission occasion set only includes a transmission occasion mutually orthogonal with the first time domain resource, or the first transmission occasion set only includes a transmission occasion occupying at least one symbol that does not belong to the first time domain resource.

As an embodiment, when the most recent transmission occasion that is of the first resource set and that is not later than the CSI reference resource of the first CSI and the first time domain resource overlap, the first transmission occasion set only includes a transmission occasion belonging to the first time domain resource.

As an embodiment, when the most recent transmission occasion that is of the first resource set and that is not later than the CSI reference resource of the first CSI and the first time domain resource overlap, the first transmission occasion set only includes a transmission occasion overlapping with the first time domain resource.

As an embodiment, when a most recent transmission occasion that is of each resource in the first resource set and that is not later than a CSI reference resource of the first CSI and the first time domain resource overlap, the first transmission occasion set only includes a transmission occasion belonging to the first time domain resource, or the first transmission occasion set only includes a transmission occasion overlapping with first time domain resource.

As an embodiment, when a most recent transmission occasion among transmission occasions that are of all resources in the first resource set and that are not later than a CSI reference resource of the first CSI and the first time domain resource overlap, the first transmission occasion set only includes a transmission occasion belonging to the first time domain resource, or the first transmission occasion set only includes a transmission occasion overlapping with first time domain resource.

As an embodiment, when the most recent transmission occasion of the first resource set that is not later than the CSI reference resource of the first CSI occupies at least one symbol that does not belong to the first time domain resource, the first transmission occasion set only includes a transmission occasion mutually orthogonal with the first time domain resource.

As an embodiment, when the most recent transmission occasion of the first resource set that is not later than the CSI reference resource of the first CSI occupies at least one symbol that does not belong to the first time domain resource, the first transmission occasion set only includes a transmission occasion occupying at least one symbol that does not belong to the first time domain resource.

As an embodiment, when the most recent transmission occasion that is of each resource in the first resource set and that is not later than a CSI reference resource of the first CSI occupies at least one symbol that does not belong to the first time domain resource, the first transmission occasion set only includes a transmission occasion mutually orthogonal with the first time domain resource, or the first transmission occasion set only includes a transmission occasion occupying at least one symbol that does not belong to the first time domain resource.

As an embodiment, when a most recent transmission occasion among transmission occasions that are of all resources in the first resource set and that are not later than a CSI reference resource of the first CSI occupies at least one symbol that does not belong to the first time domain resource, the first transmission occasion set only includes a transmission occasion mutually orthogonal with the first time domain resource, or the first transmission occasion set only includes a transmission occasion occupying at least one symbol that does not belong to the first time domain resource.

As an embodiment, when a time domain resource occupied by the most recent transmission occasion that is of the first resource set and that is not later than the CSI reference resource of the first CSI belongs to the first time domain resource, the first transmission occasion set only includes a transmission occasion belonging to the first time domain resource.

As an embodiment, when a time domain resource occupied by the most recent transmission occasion that is of the first resource set and that is not later than the CSI reference resource of the first CSI belongs to the first time domain resource, the first transmission occasion set only includes a transmission occasion overlapping with first time domain resource.

As an embodiment, when a time domain resource occupied by the most recent transmission occasion that is of each resource in the first resource set and that is not later than the CSI reference resource of the first CSI belongs to the first time domain resource, the first transmission occasion set only includes a transmission occasion belonging to the first time domain resource, or the first transmission occasion set only includes a transmission occasion overlapping with first time domain resource.

As an embodiment, when a time domain resource occupied by a most recent transmission occasion among transmission occasions that are of all resources in the first resource set and that are not later than the CSI reference resource of the first CSI belongs to the first time domain resource, the first transmission occasion set only includes a transmission occasion belonging to the first time domain resource, or the first transmission occasion set only includes a transmission occasion overlapping with first time domain resource.

As an embodiment, the first transmission occasion set depends on whether a CSI reference resource of the first CSI and the first time domain resource overlap.

As an embodiment, when the CSI reference resource of the first CSI and the first time domain resource are mutually orthogonal, the first transmission occasion set only includes a transmission occasion mutually orthogonal with the first time domain resource.

As an embodiment, when the CSI reference resource of the first CSI and the first time domain resource are mutually orthogonal, the first transmission occasion set only includes a transmission occasion occupying at least one symbol that does not belong to the first time domain resource.

As an embodiment,when the CSI reference resource of the first CSI and the first time domain resource overlap, the first transmission occasion set only includes a transmission occasion belonging to the first time domain resource.

As an embodiment, when the CSI reference resource of the first CSI and the first time domain resource overlap, the first transmission occasion set only includes a transmission occasion overlapping with the first time domain resource.

As an embodiment, when the CSI reference resource of the first CSI occupies at least one symbol that does not belong to the first time domain resource, the first transmission occasion set only includes a transmission occasion mutually orthogonal with the first time domain resource.

As an embodiment, when the CSI reference resource of the first CSI occupies at least one symbol that does not belong to the first time domain resource, the first transmission occasion set only includes a transmission occasion occupying at least one symbol that does not belong to the first time domain resource.

As an embodiment, when a time domain resource occupied by the CSI reference resource of the first CSI belongs to the first time domain resource, the first transmission occasion set only includes a transmission occasion belonging to the first time domain resource.

As an embodiment, when a time domain resource occupied by the CSI reference resource of the first CSI belongs to the first time domain resource, the first transmission occasion set only includes a transmission occasion overlapping with the first time domain resource.

### Embodiment 13

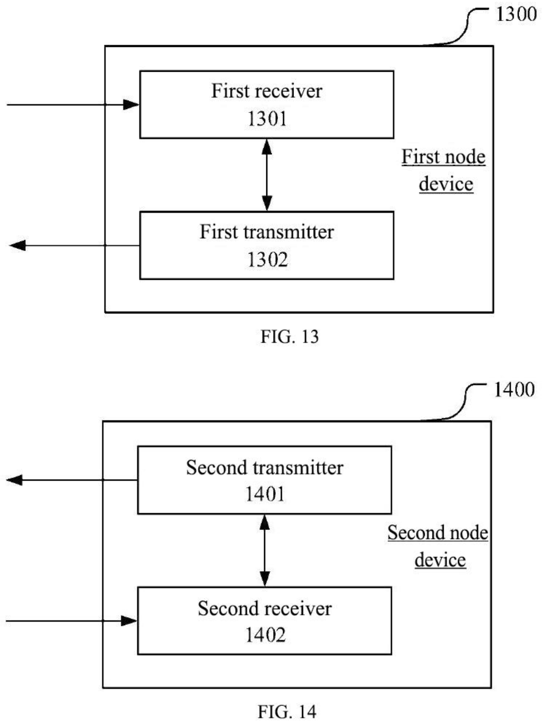

Embodiment 13 illustrates a structural block diagram of a processing apparatus used in a first node device according to an embodiment of the present application, as shown in FIG. 13. In FIG. 13, a processing apparatus 1300 in the first node device includes a first receiver 1301 and a first transmitter 1302.

As an embodiment, the first node device is user equipment.

As an embodiment, the first node device is a relay node device.

As an embodiment, the first receiver 1301 comprises at least one of {an antenna 452, a receiving device 454, a receiving processor 456, a multi-antenna receiving processor 458, a controller/processor 459, a memory 460, and a data source 467} in embodiment 4.

As an embodiment, the first transmitter 1302 includes at least one of {the antenna 452, the transmitting device 454, the transmitting processor 468, the multi-antenna transmitting processor 457, the controller/processor 459, the memory 460, and the data source 467} in Embodiment 4.

The first receiver 1301 receives a first information block, wherein the first information block is used for determining a first time domain resource, and the first time domain resource comprises at least one symbol; and receives a first configuration information block, wherein the first configuration information block is used for determining a first resource set and a second resource set.

The first transmitter 1302 sends first CSI.

In Embodiment 13, the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

As an embodiment, only one of the second resource set or the third resource set is used for obtaining an interference measurement for calculating the first CSI, and which one of the second resource set and the third resource set is used for obtaining the interference measurement for calculating the first CSI depends on the first time domain resource.

As an embodiment, only the second resource set among the second resource set and the third resource set is used for obtaining an interference measurement for calculating the first CSI, or both the second resource set and the third resource set are used for obtaining the interference measurement for calculating the first CSI; and whether one or both of the second resource set and the third resource set are used for obtaining the interference measurement for calculating the first CSI depends on the first time domain resource.

As an embodiment, the first receiver 1301 receives a second information block,
wherein the first configuration information block indicates K1 resource sets, and the K1 is a positive integer greater than 1; and the second resource set and the third resource set are each one of the K1 resource sets, and the second information block is used for determining the second resource set and the third resource set.

As an embodiment, the first receiver 1301 receives a third information block,
wherein the first configuration information block indicates K2 resource sets and K3 resource sets, the K2 and the K3 are each a positive integer, and at least one of the K2 or the K3 is greater than 1; the second resource set is one of the K2 resource sets, and the third resource set is one of the K3 resource sets; and the third information block is used for determining at least one of the second resource set or the third resource set.

As an embodiment, the first receiver 1301 receives a fourth information block and a fifth information block,
wherein the fourth information block is used for configuring the second resource set, and the fifth information block is used for configuring the third resource set.

As an embodiment, a first transmission occasion set is used for obtaining a channel measurement for calculating the first CSI, and any transmission occasion in the first transmission occasion set is a transmission occasion of one resource in the first resource set; and the first transmission occasion set depends on the first time domain resource.

As an embodiment, the first receiver 1301 receives first signaling, wherein the first signaling is used for triggering the first CSI.

### Embodiment 14

Embodiment 14 illustrates a structural block diagram of a processing apparatus used in a second node device according to an embodiment of the present application, as shown in FIG. 14. In FIG. 14, a processing apparatus 1400 in the second node device includes a second transmitter 1401 and a second receiver 1402.

As an embodiment, the second node device is a base station device.

As an embodiment, the second node device is user equipment.

As an embodiment, the second node device is a relay node device.

As an embodiment, the second transmitter 1401 includes at least one of {the antenna 420, the transmitting device 418, the transmitting processor 416, the multi-antenna transmitting processor 471, the controller/processor 475, and the memory 476} in Embodiment 4.

As an embodiment, the second receiver 1402 includes at least one of {the antenna 420, the receiving device 418, the receiving processor 470, the multi-antenna receiving processor 472, the controller/processor 475, and the memory 476} in Embodiment 4.

The second transmitter 1401 sends a first information block, wherein the first information block is used for determining a first time domain resource, and the first time domain resource comprises at least one symbol; and sends a first configuration information block, wherein the first configuration information block is used for determining a first resource set and a second resource set.

The second receiver 1402 receives first CSI.

In Embodiment 14, the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

As an embodiment, only one of the second resource set or the third resource set is used for obtaining an interference measurement for calculating the first CSI, and which one of the second resource set and the third resource set is used for obtaining the interference measurement for calculating the first CSI depends on the first time domain resource.

As an embodiment, only the second resource set among the second resource set and the third resource set is used for obtaining an interference measurement for calculating the first CSI, or both the second resource set and the third resource set are used for obtaining the interference measurement for calculating the first CSI; and whether one or both of the second resource set and the third resource set are used for obtaining the interference measurement for calculating the first CSI depends on the first time domain resource.

As an embodiment, the second transmitter 1401 sends a second information block,
wherein the first configuration information block indicates K1 resource sets, and the K1 is a positive integer greater than 1; and the second resource set and the third resource set are each one of the K1 resource sets, and the second information block is used for determining the second resource set and the third resource set.

As an embodiment, the second transmitter 1401 sends a third information block,
wherein the first configuration information block indicates K2 resource sets and K3 resource sets, the K2 and the K3 are each a positive integer, and at least one of the K2 or the K3 is greater than 1; the second resource set is one of the K2 resource sets, and the third resource set is one of the K3 resource sets; and the third information block is used for determining at least one of the second resource set or the third resource set.

As an embodiment, the second transmitter 1401 sends a fourth information block and a fifth information block,
wherein the fourth information block is used for configuring the second resource set, and the fifth information block is used for configuring the third resource set.

As an embodiment, a first transmission occasion set is used for obtaining a channel measurement for calculating the first CSI, and any transmission occasion in the first transmission occasion set is a transmission occasion of one resource in the first resource set; and the first transmission occasion set depends on the first time domain resource.

As an embodiment, the second transmitter 1401 sends first signaling, wherein the first signaling is used for triggering the first CSI.

Those of ordinary skill in the art can understand that all or part of the steps in the above-mentioned method can be completed by instructing relevant hardware through a program, and the program can be stored in a computer-readable storage medium, such as a read-only memory, a hard disk, or an optical disk. Optionally, all or part of the steps in the above-mentioned embodiments can alternatively be implemented using one or more integrated circuits. Accordingly, each module unit in the above-mentioned embodiments can be implemented in the form of hardware or in the form of a software function module. The present application is not limited to any specific form of software and hardware combination. The user equipment, terminal, and UE in the present application include but are not limited to a drone, a communication module on the drone, a remote-controlled aircraft, an aircraft, a small aircraft, a mobile phone, a tablet computer, a notebook, a vehicle-mounted communication device, a wireless sensor, an Internet card, an Internet of Things terminal, an RFID terminal, an NB-IOT terminal, an Machine Type Communication (MTC) terminal, an enhanced MTC (eMTC) terminal, a data card, an Internet card, a vehicle-mounted communication device, a low-cost mobile phone, a low-cost tablet computer, and another wireless communication device. The base station or system device in the present application includes but is not limited to a macrocell base station, a microcell base station, a femtocell, a relay base station, a gNB (NR node B), a Transmitter Receiver Point (TRP), a GNSS, a relay satellite, a satellite base station, an aerial base station, an Road Side Unit (RSU), a drone, a test device (for example a transceiver apparatus or signaling tester that simulates part functions of a base station), and other wireless communication devices.

The above is only a preferred embodiment of the present application and is not used for limiting the scope of protection of the present application. Any changes and modifications made based on the embodiments described in the specification, if similar partial or full technical effects can be obtained, should be deemed obvious and belong to the scope of protection of the present invention.

## Claims

1. A first node for wireless communication, comprising:
a first receiver receiving a first information block, wherein the first information block is used for determining a first time domain resource, and the first time domain resource comprises at least one symbol;
the first receiver receives a first configuration information block, and the first configuration information block is used for determining a first resource set and a second resource set; and
a first transmitter sending first CSI,
wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

2. The first node according to claim 1, wherein only one of the second resource set or the third resource set is used for obtaining the interference measurement for calculating the first CSI, and which one of the second resource set and the third resource set is used for obtaining the interference measurement for calculating the first CSI depends on the first time domain resource.

3. The first node according to claim 1, wherein only the second resource set among the second resource set and the third resource set is used for obtaining the interference measurement for calculating the first CSI, or both the second resource set and the third resource set are used for obtaining the interference measurement for calculating the first CSI; and whether one or both of the second resource set and the third resource set are used for obtaining the interference measurement for calculating the first CSI depends on the first time domain resource.

4. The first node according to any one of claims 1 to 3, wherein the first receiver receives a second information block; wherein the first configuration information block indicates K1 resource sets, and the K1 is a positive integer greater than 1; and the second resource set and the third resource set are each one of the K1 resource sets, and the second information block is used for determining the second resource set and the third resource set.

5. The first node according to any one of claims 1 to 3, wherein the first receiver receives a third information block; wherein the first configuration information block indicates K2 resource sets and K3 resource sets, the K2 and the K3 are each a positive integer, and at least one of the K2 or the K3 is greater than 1; the second resource set is one of the K2 resource sets, and the third resource set is one of the K3 resource sets; and the third information block is used for determining at least one of the second resource set or the third resource set.

6. The first node according to any one of claims 1 to 5, wherein the first receiver receives a fourth information block and a fifth information block; wherein the fourth information block is used for configuring the second resource set, and the fifth information block is used for configuring the third resource set.

7. The first node according to any one of claims 1 to 6, wherein a first transmission occasion set is used for obtaining the channel measurement for calculating the first CSI, and any transmission occasion in the first transmission occasion set is a transmission occasion of one resource in the first resource set; and the first transmission occasion set depends on the first time domain resource.

8. A second node for wireless communication, comprising:
a second transmitter sending a first information block, wherein the first information block is used for determining a first time domain resource, and the first time domain resource comprises at least one symbol;
the second transmitter sends a first configuration information block, and the first configuration information block is used for determining a first resource set and a second resource set; and
a second receiver receiving first CSI,
wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

9. The second node according to claim 8, wherein only one of the second resource set or the third resource set is used for obtaining the interference measurement for calculating the first CSI, and which one of the second resource set and the third resource set is used for obtaining the interference measurement for calculating the first CSI depends on the first time domain resource.

10. The second node according to claim 8, wherein only the second resource set among the second resource set and the third resource set is used for obtaining the interference measurement for calculating the first CSI, or both the second resource set and the third resource set are used for obtaining the interference measurement for calculating the first CSI; and whether one or both of the second resource set and the third resource set are used for obtaining the interference measurement for calculating the first CSI depends on the first time domain resource.

11. The second node according to any one of claims 8 to 10, wherein the second transmitter sends a second information block; wherein the first configuration information block indicates K1 resource sets, and the K1 is a positive integer greater than 1; and the second resource set and the third resource set are each one of the K1 resource sets, and the second information block is used for determining the second resource set and the third resource set.

12. The second node according to any one of claims 8 to 11, wherein the second transmitter sends a third information block; wherein the first configuration information block indicates K2 resource sets and K3 resource sets, the K2 and the K3 are each a positive integer, and at least one of the K2 or the K3 is greater than 1; the second resource set is one of the K2 resource sets, and the third resource set is one of the K3 resource sets; and the third information block is used for determining at least one of the second resource set or the third resource set.

13. The second node according to any one of claims 8 to 12, wherein the second transmitter sends a fourth information block and a fifth information block; wherein the fourth information block is used for configuring the second resource set, and the fifth information block is used for configuring the third resource set.

14. The second node according to any one of claims 8 to 13, wherein a first transmission occasion set is used for obtaining the channel measurement for calculating the first CSI, and any transmission occasion in the first transmission occasion set is a transmission occasion of one resource in the first resource set; and the first transmission occasion set depends on the first time domain resource.

15. A method used in a first node for wireless communication, comprising:
receiving a first information block, wherein the first information block is used for determining a first time domain resource, and the first time domain resource comprises at least one symbol;
receiving a first configuration information block, wherein the first configuration information block is used for determining a first resource set and a second resource set; and
sending first CSI,
wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

16. The method in a first node according to claim 15, wherein only one of the second resource set or the third resource set is used for obtaining the interference measurement for calculating the first CSI, and which one of the second resource set and the third resource set is used for obtaining the interference measurement for calculating the first CSI depends on the first time domain resource.

17. The method in a first node according to claim 15, wherein only the second resource set among the second resource set and the third resource set is used for obtaining the interference measurement for calculating the first CSI, or both the second resource set and the third resource set are used for obtaining the interference measurement for calculating the first CSI; and whether one or both of the second resource set and the third resource set are used for obtaining the interference measurement for calculating the first CSI depends on the first time domain resource.

18. The method in a first node according to any one of claims 15 to 17, comprising:
receiving a second information block,
wherein the first configuration information block indicates K1 resource sets, and the K1 is a positive integer greater than 1; and the second resource set and the third resource set are each one of the K1 resource sets, and the second information block is used for determining the second resource set and the third resource set.

19. The method in a first node according to any one of claims 15 to 18, comprising:
receiving a third information block,
wherein the first configuration information block indicates K2 resource sets and K3 resource sets, the K2 and the K3 are each a positive integer, and at least one of the K2 or the K3 is greater than 1; the second resource set is one of the K2 resource sets, and the third resource set is one of the K3 resource sets; and the third information block is used for determining at least one of the second resource set or the third resource set.

20. The method in a first node according to any one of claims 15 to 19, comprising:
receiving a fourth information block and a fifth information block,
wherein the fourth information block is used for configuring the second resource set, and the fifth information block is used for configuring the third resource set.

21. The method in a first node according to any one of claims 15 to 20, wherein a first transmission occasion set is used for obtaining the channel measurement for calculating the first CSI, and any transmission occasion in the first transmission occasion set is a transmission occasion of one resource in the first resource set; and the first transmission occasion set depends on the first time domain resource.

22. A method used in a second node for wireless communication, comprising:
sending a first information block, wherein the first information block is used for determining a first time domain resource, and the first time domain resource comprises at least one symbol;
sending a first configuration information block, wherein the first configuration information block is used for determining a first resource set and a second resource set; and
receiving first CSI,
wherein the first resource set is used for obtaining a channel measurement for calculating the first CSI, and at least one of the second resource set or a third resource set is used for obtaining an interference measurement for calculating the first CSI; and whether the third resource set is used for obtaining the interference measurement for calculating the first CSI depends on the first time domain resource.

23. The method in a second node according to claim 22, wherein only one of the second resource set or the third resource set is used for obtaining the interference measurement for calculating the first CSI, and which one of the second resource set and the third resource set is used for obtaining the interference measurement for calculating the first CSI depends on the first time domain resource.

24. The method in a second node according to claim 22, wherein only the second resource set among the second resource set and the third resource set is used for obtaining the interference measurement for calculating the first CSI, or both the second resource set and the third resource set are used for obtaining the interference measurement for calculating the first CSI; and whether one or both of the second resource set and the third resource set are used for obtaining the interference measurement for calculating the first CSI depends on the first time domain resource.

25. The method in a second node according to any one of claims 22 to 24, comprising:
sending a second information block,
wherein the first configuration information block indicates K1 resource sets, and the K1 is a positive integer greater than 1; and the second resource set and the third resource set are each one of the K1 resource sets, and the second information block is used for determining the second resource set and the third resource set.

26. The method in a second node according to any one of claims 22 to 25, comprising:
sending a third information block,
wherein the first configuration information block indicates K2 resource sets and K3 resource sets, the K2 and the K3 are each a positive integer, and at least one of the K2 or the K3 is greater than 1; the second resource set is one of the K2 resource sets, and the third resource set is one of the K3 resource sets; and the third information block is used for determining at least one of the second resource set or the third resource set.

27. The method in a second node according to any one of claims 22 to 26, comprising:
sending a fourth information block and a fifth information block,
wherein the fourth information block is used for configuring the second resource set, and the fifth information block is used for configuring the third resource set.

28. The method in a second node according to any one of claims 22 to 27, wherein a first transmission occasion set is used for obtaining the channel measurement for calculating the first CSI, and any transmission occasion in the first transmission occasion set is a transmission occasion of one resource in the first resource set; and the first transmission occasion set depends on the first time domain resource.
